# EUROPEAN PATENT SPECIFICATION

(11) **EP 3 443 020 B1**
(45) Date of publication and mention of the grant of the patent: **11.11.2020**
(21) Application number: 17719777.9
(22) Date of filing: 11.04.2017
(51) Int. Cl.: C08G 65/40

(54) **POLYISOINDOLINONES, METHODS OF MANUFACTURE, AND COMPOSITIONS AND ARTICLES FORMED THEREFROM**
POLYISOINDOLINONE, VERFAHREN ZUR HERSTELLUNG UND DARAUS HERGESTELLTE ZUSAMMENSETZUNGEN UND ARTIKEL
POLYISOINDOLINONES, PROCÉDÉS DE FABRICATION, ET COMPOSITIONS ET ARTICLES FORMÉS À PARTIR DE CES DERNIÈRES

(30) Priority: 15.04.2016 US 201662323293 P
(43) Date of publication of application: 20.02.2019
(73) Proprietor: SABIC Global Technologies B.V., 4612 PX Bergen op Zoom (NL)
(72) Inventor: PATIL, Dadasaheb V., Mount Vernon Indiana 47620 (US); SISTA, Prakash, Mount Vernon Indiana 47620 (US); SYBERT, Paul Dean, Mount Vernon Indiana 47620 (US)
(74) Representative: Modiano, Micaela Nadia
(86) International application number: PCT/US2017/026903
(87) International publication number: WO 2017/180556

(56) References cited:
- US-A- 5 254 663
- US-A1- 2007 219 344
- US-A1- 2010 113 688
- US-A1- 2011 151 262
- US-A1- 2015 210 806

## Description

### BACKGROUND

This disclosure is directed to polyisoindolinones such as poly(isoindolinone ether ether ketone)s, their methods of manufacture, and articles comprising the compositions.

Polyaryl ether ketones (also known as PAEK) comprise a class of polymers in which arylene moieties are linked by ether or carbonyl groups. An example is poly(ether ether ketone) (PEEK), which is known for a high melting point (greater than 330° C), excellent chemical resistance, thermal stability, hydrostability, low glass transition temperature, and high mechanical strength. Polyarylether ketones have significant commercial utility, especially as molded articles and as composites with glass, carbon, or polyaramide fibers for a variety of structural applications including in the aerospace and general engineering industries. The warpage and dimensional stability of these polymers, including PEEK, have been improved by the use of fillers such as glass fiber, carbon fiber, talc, and mica. Also, additives and polymers such as polyetherimide blends with PEEK have been used to inhibit the crystallization of PEEK, and hence to help improve transparency.

US2010113688 discloses compositions and methods for a melt processable semicrystalline poly(aryl ether ketone) incorporating phthalazinone and 4,4'-biphenol as comonomer units.

US2007219344 discloses high heat polyethersulfone compositions which possess unexpectedly high glass transition temperatures, comprising structural units derived from phthalimide bisphenols such as 3,3-bis(4-hydroxyphenyl)-N-phenylphthalimide, and structural units derived from at least one biphenyl-bissulfone such as 4,4'-bis((4-chlorophenyl)sulfonyl)-1,1'-biphenyl.

US2011151262 relates to polycarbonates with the structural unit which derives from phthalimide of the formula (I) and polycarbonate compositions and moulding materials therefrom as well as a process for the preparation of these polycarbonates, and the use thereof, in particular as reflectors and display substrates.US2015210806 discloses a copolymer exhibiting improved heat resistance relative to phenolic resins formed by the reaction of a bisphenol diglycidyl ether and a phenolphthalein and/or a phenolphthalimidine in a molar ratio of 0.98:1 to 1.02:1 in the presence of a catalyst

There still remains a need in the art for new polyarylether ketones. It would be desirable to prepare polyarylether ketones having one or more improved properties, such as reduced warpage, improved dimensional stability, or improved transparency. It would be especially desirable if one or more of these properties could be obtained with at least one of a high melting point, chemical resistance, thermal stability, hydrostability, high glass transition temperature, or high mechanical strength.

### SUMMARY

The instant invention provides a polyisoindolinone comprising 1-100 mole percent, preferably 5-100 mole percent, of isoindolinone ether ketone units of the formula 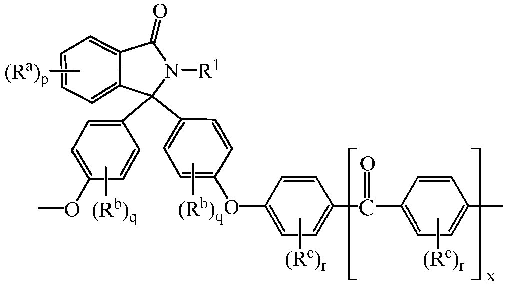 wherein each R¹ is independently the same or different, and is hydrogen, C₁₋₈ alkyl, C₃₋₈ cycloalkyl, or phenyl optionally substituted with 1-5 C₁₋₆ alkyl groups, each R^{a} is independently the same or different, and is C₁₋₆ alkyl, each R^{b} is independently the same or different, and is C₁₋₁₂ alkyl, C₂₋₁₂ alkenyl, C₃₋₈ cycloalkyl, or C₁₋₁₂ alkoxy, each R^{c} is independently the same or different, and is C₁₋₁₂ alkyl, C₂₋₁₂ alkenyl, C₃₋₈ cycloalkyl, or C₁₋₁₂ alkoxy, each p, q, and r is independently the same or different, and is an integer of 0-4, preferably 0-2, and x is an integer of 1-4, preferably 1-3, preferably 1 or 2; and 0-99 mole percent, preferably 0-95 mole percent, more preferably 1-95 mole percent, even more preferably 5-90 mole percent, of arylene ether ketone units of the formula 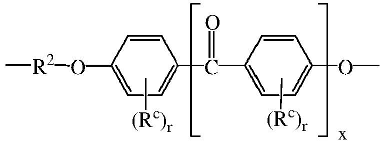 wherein each R² is independently the same or different, and is a C₆₋₃₀ substituted or unsubstituted arylene, each R^{c} is independently the same or different, and is C₁₋₁₂ alkyl, C₂₋₁₂ alkenyl, C₃₋₈ cycloalkyl, or C₁₋₁₂ alkoxy, each r is independently the same or different, and is an integer of 0-4, preferably 0-2, and x is an integer of 1-4, preferably 1-3, preferably 1 or 2; and wherein when the polyisoindolinone is a poly(isoindolinone ether ether ketone), it has a least one, preferably at least two, preferably all of the following properties: a glass transition temperature greater than 150 °C, or 150-270 °C as determined by differential scanning calorimetry, less than 25 weight percent solubility at 23 °C in dichloromethane, orthodichlorobenzene, or chloroform, or substantially no blue phosphorescence in response to irradiation with ultraviolet light of 320-400 nm.

A method of manufacturing the polyisoindolinone of the invention includes polymerizing a dihydric monomer composition comprising, based on the total weight of the monomer composition: 1-100 mole percent, preferably 5-100 mole percent, of a dihydroxy isoindolinone of the formula: 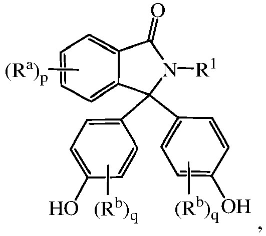 and
0-99 mole percent, preferably 0-95 mole percent, of a dihydroxy arylene compound of the formula HO-R²-OH, with a dihalogenated compound of the formula 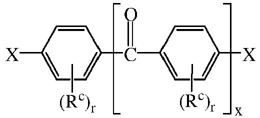 wherein each X is independently the same or different, and is a halogen, preferably fluorine, chlorine, or bromine, or a combination comprising at least one of the foregoing, in a liquid-phase polymerization mixture further comprising an organic solvent for the dihydroxy monomer composition and the dihalogenated compound, under conditions sufficient to effect the polymerization.

A composition comprises the above-described polymers according to the invention or polymers made by the above-described method of the invention and an additive, particulate filler, reinforcing agent, or a combination comprising at least one of the foregoing.

Articles and methods of making the articles using the above described polymers and compositions are also described, preferably wherein the article is a molded article, a layer, one or more layers of a multilayer, an extruded article, a coating, a pellet, a powder, a foam, a tubing, a fiber, or a flake;
preferably wherein the article is an optical lens, a site glass, optical fiber connector, an electrical connector, a light-emitting diode reflector, a printed circuit board substrate, a reflector for automotive headlamp, a component of a fuel system for a gasoline engine, or a diesel engine, an aircraft jet engine, or an aircraft turboprop engine, a fuel bowl, or a fuel filter housing.

The above described and other features are exemplified by the following drawings, detailed description, examples, and claims.

### BRIEF DESCRIPTION OF THE DRAWING

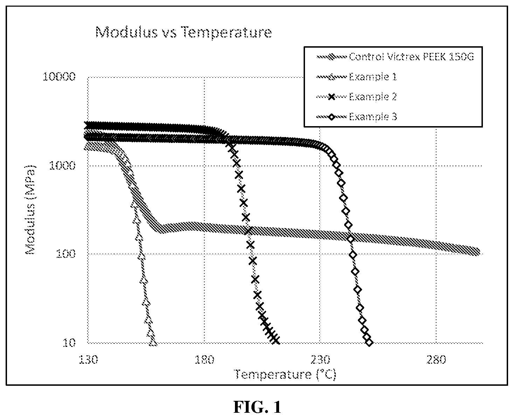

FIG. 1 is a plot showing the modulus versus temperature of the examples.

### DETAILED DESCRIPTION

Described herein are polyarylether ether ketones comprising aromatic isoindolinone ether moieties. In particular, the polymers are poly(isoindolinone ether ether ketone)s, poly(isoindolinone ether ether ketone ketone)s, and the like, which will be referred to collectively herein as "polyisoindolinones" for convenience. The polyisoindolinones are melt processable, and have good heat stability. The polymers can further have one or more of good transparency (clarity), good mechanical properties, low color, good hydrostability, and good chemical resistance.

In an aspect, the polyisoindolinones comprise substantially or completely 100 mole percent of isoindolinone ether ether ketone units of formula (1).

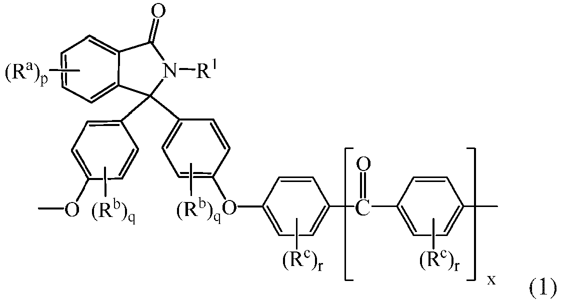

In formula (1), R¹ is hydrogen, C₁₋₈ alkyl, C₃₋₈ cycloalkyl, or phenyl optionally substituted with 1-5 C₁₋₆ alkyl groups. In an embodiment, R¹ is hydrogen, C₁₋₆ alkyl, C₃₋₆ cycloalkyl, or phenyl optionally substituted with 1-3 C₁₋₆ alkyl groups. Preferably, R¹ is hydrogen, C₁₋₃ alkyl, or unsubstituted phenyl. Most preferably, R¹ is unsubstituted phenyl. The isoindolinone ether ketone units in the same polymer can have different R¹ groups, but preferably each R¹ is the same.

Also in formula (1), each R^{a} is independently the same or different, and is C₁₋₆ alkyl, preferably C₁₋₄ alkyl, more preferably C₁₋₃ alkyl; and p is an integer of 0-4, preferably 0, 1, or 2, most preferably 0. The isoindolinone ether ketone units in the same polymer can have different values of p, but preferably each value of p is the same.

Further in formula (1), each R^{b} is independently the same or different, and is C₁₋₁₂ alkyl, C₂₋₁₂ alkenyl, C₃₋₈ cycloalkyl, or C₁₋₁₂ alkoxy, preferably C₁₋₆ alkyl, C₂₋₆ alkenyl, C₃₋₆ cycloalkyl, or C₁₋₆ alkoxy, more preferably C₁₋₃ alkyl, and most preferably methyl; and q is an integer of 0-4, preferably 0, 1, or 2, most preferably 0. The isoindolinone ether ketone units in the same polymer can have different values of q, but preferably each value of q is the same. When each R^{b} is methyl and q is 1, the methyl group can be disposed ortho to the tetravalent carbon atom linking the phenoxy groups to the isoindolinones group.

Still further in formula (1), each R^{c} is independently the same or different, and is C₁₋₁₂ alkyl, C₂₋₁₂ alkenyl, C₃₋₈ cycloalkyl, or C₁₋₁₂ alkoxy, preferably C₁₋₆ alkyl, C₂₋₆ alkenyl, C₃₋₈ cycloalkyl, or C₁₋₁₂ alkoxy, more preferably C₁₋₃ alkyl, most preferably methyl; and r is an integer of 0-4, preferably 0-2, most preferably 0. The isoindolinone ether ketone units in the same polymer can have different values of r, but preferably each value of r is the same.

Finally in formula (1), x is an integer of 1-4, preferably 1-3, preferably 1 or 2. The isoindolinone ether ketone units in the same polymer can have different values of x, but preferably each value of x is the same. The polyisoindolinones contain poly(isoindolinone ether ether ketone) units when x is 1. The polyisoindolinones contain poly(isoindolinone ether ether ketone ketone) units when x is 2, and so on.

In some embodiments of the polyisoindolinone of formula (1), R¹ is hydrogen, C₁₋₆ alkyl, C₃₋₆ cycloalkyl, or phenyl optionally substituted with 1-3 C₁₋₆ alkyl groups; R^{a} is C₁₋₄ alkyl; each R^{b} is independently the same or different, and is C₁₋₆ alkyl, C₂₋₆ alkenyl, C₃₋₆ cycloalkyl, or C₁₋₆ alkoxy; each R^{c} is independently the same or different, and is C₁₋₆ alkyl, C₂₋₆ alkenyl, C₃₋₈ cycloalkyl, or C₁₋₁₂ alkoxy; each p is the same, and is 0 or 1, preferably 0; each q is the same, and is 0 or 1, preferably 0; each r is the same, and is 0 or 1, preferably 0; and each x is an integer of 1-3, preferably 1 or 2.

In other embodiments of the polyisoindolinone of formula (1), R¹ is hydrogen, C₁₋₃ alkyl, or unsubstituted phenyl; each R^{a} is C₁₋₃ alkyl; each R^{b} is independently the same or different, and is C₁₋₃ alkyl, preferably methyl, each R^{c} is independently the same or different, and is C₁₋₃ alkyl, preferably methyl, each p, q, and r is independently the same or different, and is an integer of 0, 1, or 2, preferably 0, and x is 1 or 2.

In a specific embodiment, R¹ is phenyl, p, q, and r are each zero, and x is 1, providing the poly(*N*-phenyl isoindolinone ether ether ketone) of formula (1a) 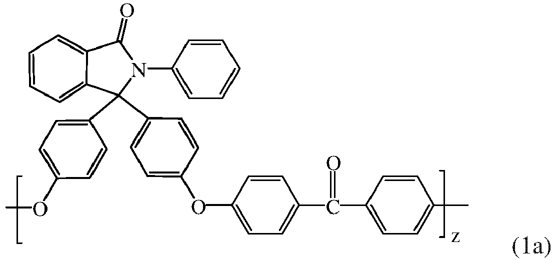 wherein z is the number of repeating units, and is greater than 1, for example 2-1,000, or 5-800, or 10-500, or 10-350.

In another specific embodiment, R¹ is phenyl, p, q, and r are each zero, and x is 2, providing the poly(N-phenyl isoindolinone ether ether ketone ketone) of formula (1b).

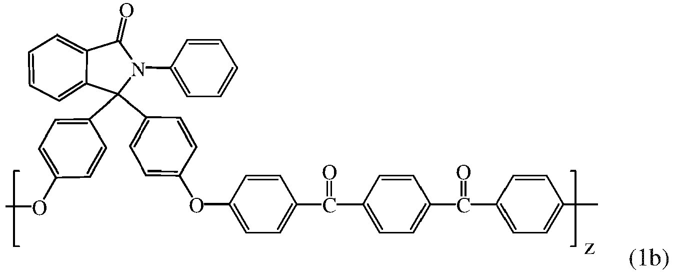

In another aspect, the polyisoindolinones can comprise additional ether units. In these embodiments, the polyisoindolinones comprise 1 to 99 mole percent, preferably 5 to 95 mole percent of isoindolinone ether ketone units of formula (1), and 1 to 99 mole percent, preferably 5 to 95 mole percent, of arylene ether ketone units of formula (2), based on the total moles of units of formulas (1) and (2).

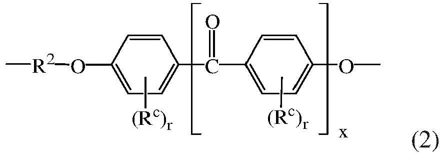

In formula (2), each R^{c} is independently the same or different, and is C₁₋₁₂ alkyl, C₂₋₁₂ alkenyl, C₃₋₈ cycloalkyl, or C₁₋₁₂ alkoxy; preferably each R^{c} is the same and is C₁₋₃ alkyl, preferably methyl; and each r is independently the same or different, and is an integer of 0-4, preferably 0-2, more preferably 0 or 1, still more preferably 0. The arylene ether ketone units in the same polymer can have different values of r, but preferably each value of r is the same.

Further in formula (2), x is an integer of 1-4, preferably 1-3, more preferably 1 or 2. The arylene ether ketone units in the same polymer can have different values of x, but preferably each value of x is the same. The polyaryl ether ketones contain poly(aryl ether ether ketone) units when each x is 1. The polyaryl ether ketones contain poly(aryl ether ether ketone ketone) units when x is 2.

Also in formula (2) each R² is independently the same or different, and is a C₆₋₃₀ substituted or unsubstituted arylene. In an embodiment, R² is a C₆₋₃₀ substituted or unsubstituted arylene of formula (3).

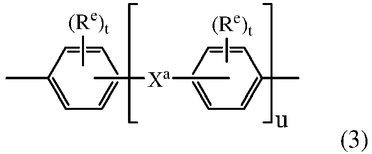

In formula (3), each R^{e} is independently the same or different, and is C₁₋₁₂ alkyl, C₂₋₆ alkenyl, C₃₋₆ cycloalkyl, or C₁₋₆ alkoxy, preferably C₁₋₆ alkyl, C₂₋₆ alkenyl, C₃₋₆ cycloalkyl, or C₁₋₆ alkoxy, more preferably each R^{e} is the same and is C₁₋₃ alkyl, most preferably methyl; and each t is independently the same or different, and is an integer of 0-4, preferably an integer of 0-2, and more preferably each t is the same, and is 0 or 1, most preferably 0. Each R² in the same polymer can have different values of t, but preferably each value of t is the same.

Further in formula (3), each u is independently the same or different, and is an integer of 0-4, preferably 0-2, and more preferably each u is the same and is 0 or 1. Each R² in the same polymer can have different values of t, but preferably each value of t is the same.

Finally in formula (3), X^{a} is a single bond, -O-, -S-, -S(=O)-, -S(=O)₂-, -C(=O)-, - P(R)(=O)- (wherein R is a C₁₋₈ alkyl or C₆₋₁₂ aryl), or a C₁₋₁₈ organic bridging group. Preferably X^{a} is a single bond, -O-, -S-, -S(=O)-, -S(=O)₂-, -P(R)(=O)- (wherein R is a C₁₋₆ alkyl or phenyl), -C(=O)-, a C₁₋₁₂ alkylidene, a substituted or unsubstituted C₃₋₆ cycloalkylene, or a substituted or unsubstituted C₃₋₆ cycloalkylidene. More preferably, X^{a} is a single bond, -O-, -S-, -S(=O)-, - S(=O)₂-, -C(=O)-, -P(R)(=O)- (wherein R is a C₁₋₆ alkyl or phenyl), or a C₁₋₆ alkylidene. Each R² in the same polymer can have the same X^{a}, or two different X^{a} groups, or three different X^{a} groups. In an embodiment, each R² in the same polymer has the same X^{a} group.

Specific examples of the foregoing R ² groups include those derived from *p-*hydroquinone, methyl hydroquinone, dimethyl hydroquinone, tert-butyl hydroquinone, di-tert-butyl hydroquinone, resorcinol, 4,4'-biphenol, 4,4'-dihydroxydiphenyl ether, 4,4'-isopropylidenediphenol (also known as bisphenol A, or BPA), bis(3,5-dimethyl-4-hydroxyphenyl)isopropylidene,4,4'-(hexafluoroisopropylidene)diphenol, 4,4'-(hexafluoroisopropylidene)diphenol, bis(4-hydroxyphenyl) sulfoxide, bis(4-hydroxyphenyl) sulfone, bis(4-hydroxyphenyl) sulfide, bis(3,5-dimethyl-4-hydroxyphenyl) sulfone, 4,4'-(1-phenylethylidene)bisphenol, 4,4'-dihydroxybenzophenone, 1,4-bis-(p-hydroxybenzoyl)benzene, 1,3-bis-(p-hydroxybenzoyl)benzene. A combination comprising at least one of the foregoing can be present in the polymer.

In a preferred embodiment of formula (2), each R^{c} is independently the same or different, and is C₁₋₆ alkyl, C₂₋₆ alkenyl, C₃₋₆ cycloalkyl, or C₁₋₆ alkoxy; each r and t is independently the same or different, and is an integer of 0 or 1, preferably 0; each u is independently the same or different, and is an integer of 0 or 1; x is 1-3, more preferably 1 or 2; and X^{a} is a single bond, -O-, -S-, -S(=O)-, -S(=O)₂-, -C(=O)-, -P(R)(=O)- (wherein R is a C₁₋₈ alkyl or C₆₋₁₂ aryl), C₁₋₁₂ alkylidene, C₃₋₆ cycloalkylene, or C₃₋₆ cycloalkylidene.

In another preferred embodiment of formula (2), each R^{c} is the same C₁₋₃ alkyl, preferably methyl, each r and t is independently the same or different, and is an integer of 0 or 1, preferably 0; each u is independently the same or different, and is an integer of 0 or 1; x is 1 or 2, and X^{a} is a single bond, -O-, -S-, -S(=O)-, -S(=O)₂-, -C(=O)-, -P(R)(=O)- (wherein R is a C₁₋₆ alkyl or phenyl), or a C₁₋₆ alkylidene.

For example, the arylene ether ketone units of formula (2) can be of formula (2a.) 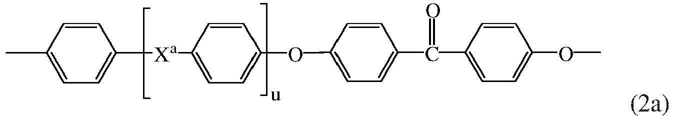 wherein X^{a} is a single bond, -O-, -S-, -S(=O)-, -S(=O)₂-, -C(=O)-, -P(R)(=O)- (wherein R is a C₁₋₆ alkyl or phenyl), a C₁₋₁₂ alkylidene, C₃₋₆ cycloalkylene, or C₃₋₆ cycloalkylidene, and u is 0 or 1. Preferably X^{a} is a single bond, -O-, -S-, -S(=O)-, -S(=O)₂-, -C(=O)-, -P(R)(=O)- wherein R is a C₁₋₆ alkyl or phenyl), or a C₁₋₆ alkylidene, and u is 0 or 1.

The mole ratios of the isoindolinone ether ketone units (1) to the arylene ether ketone units (2) can vary widely, depending on the desired characteristics of the polymer, ease of synthesis, cost, and like considerations. As stated above, the mole ratio of isoindolinone ether ketone units (1) : arylene ether ketone units (2) can be from 1:99 to 99:1, or from 5:95 to 95:5. In some embodiments the mole ratio of units (1) : units (2) can be 10:90 to 90:10, or 20:80 to 80:20, or 30:70 to 70:30, or 40:60 to 60:40. In other embodiments the mole ratio of units (1) : units (2) can be from 50:50 to 99:1, or from 60:40 to 95:5, or 70:30 to 90:10. Alternatively, the mole ratio of units (1) : units (2) can be from 1:99 to 50:50, or 5:95 to 40:60, or 10:90 to 30:70.

Within these mole ranges, in a preferred embodiment of the polyisoindolinones comprising isoindolinone ether ketone units (1) and arylene ether ketone units (2), R¹ is hydrogen, C₁₋₆ alkyl, C₃₋₆ cycloalkyl, or phenyl optionally substituted with 1-3 C₁₋₆ alkyl groups; R^{a} is C₁₋₄ alkyl; each R^{b} is independently the same or different, and is C₁₋₆ alkyl, C₂₋₆ alkenyl, C₃₋₆ cycloalkyl, or C₁₋₆ alkoxy; each R^{c} is independently the same or different, and is C₁₋₆ alkyl, C₂₋₆ alkenyl, C₃₋₈ cycloalkyl, or C₁₋₁₂ alkoxy; each R^{c} is independently the same or different, and is C₁₋₆ alkyl, C₂₋₆ alkenyl, C₃₋₆ cycloalkyl, or C₁₋₆ alkoxy; each p, q, r, s, and t is independently the same or different, and is an integer of 0 or 1, preferably 0; each u is independently the same or different, and is 0 or 1; each x is independently the same or different, and is an integer of 1-4, preferably 1-3, more preferably 1 or 2.

In another preferred embodiment of the polyisoindolinones comprising isoindolinone ether ketone units (1) and arylene ether ketone units (2), R¹ is hydrogen, C₁₋₃ alkyl, or unsubstituted phenyl; each R^{a} is the same C₁₋₃ alkyl; each R^{b} is the same C₁₋₃ alkyl, preferably methyl; each R^{c} is the same C₁₋₃ alkyl, preferably methyl; each R^{c} is the same C₁₋₃ alkyl, preferably methyl; each p, q, r, s, and t is independently the same or different, and is an integer of 0 or 1, preferably 0; each u is independently the same or different, and is 0 or 1; each x is the same, and is 1 or 2.

In another aspect, a method for the synthesis of the foregoing polyisoindolinones is described. In general, the synthesis proceeds via nucleophilic substitution. This and other processes for the manufacture of the polyisoindolinones are described, for example, in U.S. Pat. No. 4,176,222. In particular, a polyisoindolinone comprising isoindolinone ether ketone units of formula (1) can be obtained in a polymerization reaction of a dihydroxy isoindolinone compound of formula (4) 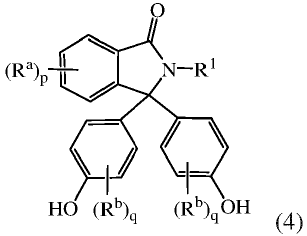 with a dihalogenated aromatic compound of formula (5) 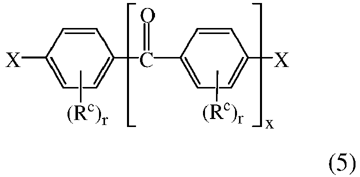 in a liquid-phase polymerization mixture that further comprises a base. The variables in the dihydroxy isoindolinone compound (4) and the dihalogenated aromatic compound (5) are as defined in formulas (1) and (2); and each X formula (5) is independently the same or different, and is a halogen, preferably fluorine, or chlorine.

In another embodiment, a polyisoindolinone comprising isoindolinone ether ketone units (1) and arylene ether ketone units (2) can be made by further including a dihydroxy arylene compound of formula (6) in the polymerization mixture.

HO-R²-OH (6)

The variable R² in formula (6) is as defined in formula (2) and (2a). The relative amount of dihydroxy isoindolinone compound (4) to dihydroxy arylene compound (6) depends on the relative reactivity of the dihydroxy compounds, the order of addition, and like considerations. In some embodiments, the amount of dihydroxy isoindolinone compound (4) is 1-100 mole percent, preferably 5-100 mole percent, and the amount of dihydroxy arylene compound (6) is 0-99 mole percent, preferably 5-95 mole percent, each based on the total moles dihydroxy isoindolinone compound (4) and dihydroxy arylene compound (6) (referred to collectively herein as "the dihydric monomer composition"). In some embodiments, the relative molar ratio of dihydroxy isoindolinone compound (4) to dihydroxy arylene compound (6) can be 10:90 to 90:10, or 20:80 to 80:20, or 30:70 to 70:30, or 40:60 to 60:40. In other embodiments the mole ratio of hydroxy isoindolinone compound (4) and dihydroxy arylene compound (6) can be from 50:50 to 99:1, or from 60:40 to 95:5, or 70:30 to 90:10. Alternatively, the mole ratio of hydroxy isoindolinone compound (4) and dihydroxy arylene compound (6) can be from 1:99 to 50:50, or 5:95 to 40:60, or 10:90 to 30:70.

Similarly, conditions for the formation of the poly(isoindolinone) can be varied depending on considerations such as the reactivity of the reactants, desired yields and purity, efficiency, and cost.

For example, the hydroxy isoindolinone compound (4) can have less than 1000 parts per million by weight (ppm), or less than 800 ppm, or less than 500 ppm each of a monoaminophenol of formula (7a) or a phenolphthalein compound of formula (7b). 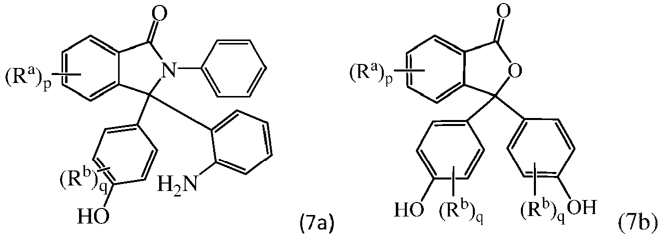 In formulas (7a) and (7b), each variable is the same as in formula (1) or (1a). The amount of the monoaminophenol (7a) or phenolphthalein compound (7b) can each be determined by liquid chromatography analysis as is known in the art.

The base is selected to increase the rate of polymerization, and can be selected based on the specific reactants, solvent, and polymerization conditions. The base can be an alkali or alkaline earth metal hydroxide, alkali or alkaline earth metal carbonate, alkali or alkaline earth metal bicarbonate, or a combination comprising at least one of the foregoing. In an embodiment, the base is sodium hydroxide, potassium hydroxide, sodium carbonate, cesium hydroxide, potassium carbonate, cesium carbonate, strontium carbonate, sodium hydrogen carbonate, potassium hydrogen carbonate, or a combination comprising at least one of the foregoing.

To conduct the polymerization in a liquid phase, an organic solvent can be present that is effective to dissolve the reactants. Examples of organic solvents that can be used include diphenylsulfone, dimethyl sulfone, sulfolane, N-methyl-caprolactam, N-methyl-2-pyrrolidone, dimethyl sulfoxide, dimethyl acetamide, dimethyl formamide, diphenylether, tetramethylurea, N-ethylpyrrolidone, 1,3-dimethyl-2-imidazolidinone, or a combination comprising at least one of the foregoing.

A cosolvent can be present during the polymerizing, for example for the purpose of azeotropic distillation of water from the polymerization mixture. The cosolvent can be an aromatic hydrocarbon, preferably toluene, xylene, ortho-dichlorobenzene, trichlorobenzene, or mesitylene, or an aliphatic hydrocarbon, preferably cyclohexane.

The reactant content (also referred to as "solids content") in the liquid-phase polymerization mixture can vary depending on the reactants, polymerization conditions, and equipment used to conduct the polymerization. For example, the solids content can be 25-80% by weight, based on the total weight of the polymerization mixture.

The polymerization is conducted under conditions effective to promote the nucleophilic substitution. For example the polymerization can be conducted for 1 to 24 hours, or 2 to 12 hours, or 2 to 6 hours. The polymerization can be conducted at atmospheric pressure, or greater than atmospheric pressure, for example up to 10 bar. The polymerization can be conducted under an inert atmosphere, for example under nitrogen or argon. The polymerization can be conducted at room temperature, but is preferably heated, for example to a temperature of 50-400 °C, or 80-400 °C. In some embodiments a multi-step heating regime is used, for example heat at to a temperature greater than 100 °C, and less than the decomposition temperature of the reactants, the solvent, and the polymer for a first time period, followed by heating at 200-350 °C for a second time period until the polymerization has proceed to the desired degree of completion.

The relative molar ratio of the dihydric monomer composition (isoindolinone ether ether ketone units (1) and arylene ether ketone units (2) (if present)) to the dihalogenated aromatic compound (5) can be varied depending on the reactivity of the reactants, order of addition, and like polymerization considerations. In some embodiments the molar ratio of the dihydric monomer composition to the dihalogenated aromatic compound (5) is 1.8:2.2 to 2.2:1.8, or 1.9:2:1, or 1.95:2.05 to 2.05:1.95.

In some embodiments, the dihydroxy isoindolinone compound (4), the dihydroxy arylene compound (6), or both, are converted to the corresponding alkali or alkaline earth metal salts before or during contacting with the dihalogenated aromatic compound (5). Preferably, before contacting with the dihalogenated aromatic compound (5), the monomers of the dihydric monomer composition are at least partially, preferably substantially completely or completely, converted to the corresponding alkali or alkaline earth metal salts (8) or (9)

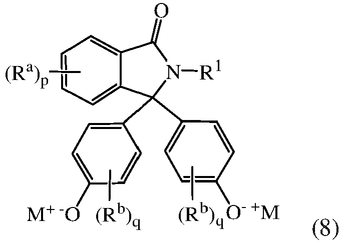

M⁺⁻O-R²-O⁻⁺M (9)

to provide a dialkali or alkaline earth metal salt composition. The variable in formulas (8) and (9) are as defined in formulas (1), (1a), (2), and (2a). Conversion to the salt can be effected by pre-contacting the dihydroxy isoindolinone compound (4), the dihydroxy arylene compound (6), or both with the base used in the polymerization.

In a preferred embodiment, the dialkali or alkaline earth metal salt composition is formed in situ by reacting the dihydroxy isoindolinone compound (4), the dihydroxy arylene compound (6), or both in the presence of an alkali or alkaline earth metal source, under conditions effective to form the dialkali or alkaline earth metal salts, preferably wherein the alkali or alkaline earth metal source is provided in an amount of 0.5-1.05 molar equivalent per mole of hydroxy group. The alkali or alkaline earth metal source can be an alkali or alkaline earth metal hydroxide, alkali or alkaline earth metal carbonate, alkali or alkaline earth metal bicarbonate, or a combination comprising at least one of the foregoing. In an embodiment, the alkali or alkaline earth metal source is sodium hydroxide, potassium hydroxide, sodium carbonate, cesium hydroxide, potassium carbonate, cesium carbonate, strontium carbonate, sodium hydrogen carbonate, potassium hydrogen carbonate, or a combination comprising at least one of the foregoing.

The method can further comprise dehydrating the alkali or alkaline earth metal salt composition to remove water before, during, or after introduction of the dihalogenated aromatic compound (5). Dehydrating can be by one or more of azeotropic distillation in the presence of suitable co-solvent or in the presence of inert gas atmosphere sweep, preferably nitrogen, argon, or a combination comprising at least one of the foregoing. In an embodiment, dehydrating is conducted before heating the polymerization mixture to a temperature greater than 100 °C, and less than the decomposition temperature of the reactants, the solvent, and the polymer; and then preferably heating the polymerization mixture from 200-350 °C until the polymerization has proceed to the desired degree of completion.

In some embodiments, a water content of the liquid-phase polymerization mixture is maintained at less than 0.5 wt%, or less than 0.25 wt%, based on the total weight of the polymerization mixture. The water content can be maintained as this level by azeotropic distillation in the presence of suitable co-solvent or in the presence of inert gas atmosphere sweep, preferably nitrogen, argon, or a combination comprising at least one of the foregoing.

The polymerizing can be in the presence of an end capping agent, preferably 1.5-4 mole percent of an end capping agent, based on the total moles of dihydric monomer. The end capping agent can be a monohydric compound, a monohalide compound, a monoacyl halide, or a combination comprising at least one of the foregoing. Preferably the monohydric compound or monohalide compound is aromatic. For example, the monohydric compound can be phenol, p-tertbutyl phenol, p-cumylphenol, 4-phenylphenol, or 4-hydroxybenzophenone; the monohalide compound can be a C₁₋₁₂ alkyl halide or C₆₋₁₂ aryl halide; and the monoacyl halide can be a C₂₋₁₂ alkyl acyl halide or C₆₋₁₂ aryl acyl halide. The end capping agent can be added at the beginning, during, or at the end of the polymerization, but more preferably the end capping agent is added at the beginning or during the polymerization.

The progress of the polymerization can be monitored by a number of methods, for example by monitoring a polymer hydroxyl end group content, or polymer halogen content, or polymer molecular weight change.

The hydroxyl end group content of the polymer can be determined by by various titration and spectroscopic methods well known in the art. Spectroscopic methods include infrared, nuclear magnetic resonance (NMR), Raman spectroscopy, and fluorescence. Examples of infrared methods are described in J, A. Kreuz, et al, J. Poly. Sci. Part A-1, vol. 4, pp. 2067 2616 (1966). Examples of titration methods are described in Y. J. Kim, et al, Macromolecules, vol. 26, pp. 1344 1358 (1993). It may be advantageous to make derivatives of polymer end groups to enhance measurement sensitivity using variations of methods as described in K. P. Chan et al., Macromolecules, vol. 27, p. 6731 (1994) and J. S. Chao, Polymer Bull., vol. 17, p. 397 (1987). In some embodiments, the polymerization is continued until the resultant polyisoindolinone has a hydroxyl end group content of less than 700 parts ppm by weight of the polymer, or less than 500 ppm by weight of the polymer.

The halogen end group content of the polymer can be determined by NMR spectroscopy or ion chromatography after combustion, for example. In some embodiments, the polymerization is continued until the resultant polyisoindolinone has a halogen end group content of less than 900 ppm, or less than 700 ppm by weight of the polymer.

In some embodiments, the polymerization is continued until the resultant polyisoindolinone has a weight average molecular weight (Mw) change of less than 500 Daltons/hour, or less than 300 Daltons/hour. The Mw can be determined, for example, by light scattering, inherent viscosity (IV) techniques, or gel permeation chromatography (GPC) using polystyrene standards and aggressive solvents such as those used for polyphenylene sulfide (e.g., o-chloro naphthalene) or PEEK (e.g, 80% chloroform with 20% dichloroacetic acid).

The polyisoindolinones can be separated from the polymerization mixture by methods known in the art, for example by decanting, centrifuging, or extracting. The assynthesized polyisoindolinones can be further purified by methods known in the art, for example by extracting, precipitating, washing, or crystallizing.

The above methods for the manufacture of the poly(isoindolinone ether ether ketone)s in particular provide polymers having at least one, preferably at least two, preferably all of the following properties: a glass transition temperature greater than 150 °C, or 150-270 °C as determined by differential scanning calorimetry; less than 25 weight percent (wt%) solubility at 23 °C in dichloromethane, orthodichlorobenzene, or chloroform, or substantially no blue phosphorescence in response to irradiation with ultraviolet light of 320-400 nanometer (nm). Without being bound by theory, it is believed that the above methods provide poly(isoindolinone ether ether ketone)s of higher molecular weight, or greater purity. These polymers are accordingly more suitable for use in articles requiring one or more of improved chemical resistance, improved heat resistance, improved mechanical properties, improved transparency, or higher Tg.

In general, the properties of the polyisoindolinones can be varied to suit the particular application, by varying the type of units, including any substituents on the units, the relative amount of each type of unit, and the method of manufacture of the polyisoindolinones.

In some embodiments, the polyisoindolinones, in particular the poly(isoindolinone ether ether ketone)s, can have a glass transition temperature greater than 150 °C, or 150-300 °C, or 150-270 °C as determined by differential scanning calorimetry, using a heating and cooling ramp of 20 °C/minute.

The polyisoindolinones can have less than 25 wt%, or less than 15 wt%, or less than 5 wt%, or less than 1 wt% solubility at 23 °C in dichloromethane, orthodichlorobenzene, or chloroform. The polyisoindolinones can have less than 25 wt%, or less than 15 wt%, or less than 5 wt%, or less than 1 wt% solubility at 23 °C in 1,1,1,3,3,3-hexafluoro-2-propanol, N-methyl-2-pyrrolidone, dimethyl sulfoxide, dimethyl acetamide, dimethyl formamide, m-cresol, o-dichlorobenzene, 1,3,5-trichlorobenzene, a mixture comprising phenol and trichloroethane, or a combination comprising at least one of the foregoing.

The polyisoindolinones, in particular the poly(isoindolinone ether ether ketone)s, can have no, or substantially no, blue phosphorescence in response to irradiation with ultraviolet light of 320-400 nm.

The polyisoindolinones, in particular the poly(isoindolinone ether ether ketone)s, can have less than 25 ppm, or less than 20 ppm, or less than 10 ppm, of benzylic protons based on the weight of the polyisoindolinone. The amount of benzylic protons can be determined by ordinary chemical analysis, for example proton NMR spectroscopy. In an embodiment, the polymer is free or substantially free of linkages that can react in the melt to change the molecular weight of the polymer. The presence of benzylic protons in the polyisoindolinone can accelerate reactions that change molecular weight in the melt. Due to the increased melt stability of the resultant polymer, polyisoindolinones with structural units derived from monomers and capping agents essentially free of benzylic protons are desirable in some applications, especially those involving isolation from the melt and melt processing after polymerization. As used herein, "substantially or essentially free of benzylic protons" means that the polyisoindolinone has less than or equal to about 5 mole % of structural units, or less than or equal to about 3 mole % structural units, or less than or equal to about 1 mole % structural units derived containing benzylic protons. "Free of benzylic protons" means that the polyisoindolinone has zero mole % of structural units derived from monomers and end cappers containing benzylic protons.

The polyisoindolinones, in particular the poly(isoindolinone ether ether ketone)s, can have a hydroxyl polymer end group content of less than 700 ppm, or less than 500 ppm, or less than 300 ppm based on the weight of the polyisoindolinone, which can be determined by various titration and spectroscopic methods well known in the art as described above. Low hydroxyl group content can provide compositions having improved thermal properties, for example improved long-term heat aging at elevated temperatures (e.g., above 100°C).

The polyisoindolinones, in particular the poly(isoindolinone ether ether ketone)s, can have a halogen content of less than 900 ppm, or less than 700 ppm, based on the weight of the polyisoindolinone. The amount of halogen atoms can be determined by ordinary chemical analysis for example combustion followed by ion chromatogram or ICP atomic emission spectroscopy. Polymers free of halogen atoms are sometimes desired for regulatory and environmental reasons.

The polyisoindolinones, in particular the poly(isoindolinone ether ether ketone)s, can have a residual alkali or alkaline earth metal cation content of less than 500 ppm, or less than 300 ppm, based on the weight of the polyisoindolinone, which can be determined by inductively coupled plasma mass spectroscopy (ICP-MS) or ion chromatography (IC). Low alkali or alkaline earth metal content can provide improved electrical properties, for example a low comparative tracking index (CTI). Low CTI is especially desirable for electrically insulating compositions.

The polyisoindolinones, in particular the poly(isoindolinone ether ether ketone)s, can have a residual solvent content of less than 500 ppm, or less than 250 ppm, or less than 100 ppm based on the weight of the polyisoindolinone, which can be determined by gas chromatography (GC) or liquid chromatography. Polymers having low solvent content are sometimes desired for regulatory and environmental reasons and to achieve polymer part with reduced surface defects such as mold-splay or plate-out.

The polyisoindolinones, in particular the poly(isoindolinone ether ether ketone)s, can have a weight average molecular weight of at least 15,000 Daltons, preferably 20,000-100,000 Daltons, more preferably 20,000-60,000 Daltons, as determined by GPC, light scattering, or IV techniques as described above.

The polyisoindolinones, in particular the poly(isoindolinone ether ether ketone)s, can have an onset decomposition temperature of greater than 485°C as determined using thermogravimetric analysis in air and nitrogen.

The polyisoindolinones, in particular the poly(isoindolinone ether ether ketone)s, can have a coefficient of thermal expansion of 30-90 ppm/°C, or 30-60 ppm/°C, or 40-60 ppm/°C, as determined according to ASTM E 831.

The polyisoindolinones, in particular the poly(isoindolinone ether ether ketone)s, can have 10% crystallinity or higher, or 20% crystallinity or higher, as determined using differential scanning calorimetry on the second heat cycle, wherein heating and cooling is at a rate of 20 °C/minute for both heating and cooling cycles. Alternatively, the polyisoindolinones, in particular the poly(isoindolinone ether ether ketone)s, can have less than 10% crystallinity, or less than 5% crystallinity, or no crystallinity for certain applications.

The polyisoindolinones, in particular the poly(isoindolinone ether ether ketone)s, can have a water uptake of less than 3 percent, preferably less than 1 percent, most preferably less than 0.6 percent at 23/°C, after 24 hours of direct immersion.

The polyisoindolinones, in particular the poly(isoindolinone ether ether ketone)s, can have a shift in melt viscosity of less than 30% over 30 min at 380 C under a nitrogen atmosphere as measured in a small amplitude oscillatory time sweep rheology at a fixed angular frequency of 10 radians/second.

The polyisoindolinones, in particular the poly(isoindolinone ether ether ketone)s, can have a char yield of greater than 30 wt%, as determined using thermogravimetric analysis under inert atmosphere of nitrogen.

According to a preferred embodiment the invention discloses polyisoindolinones, in particular the poly(isoindolinone ether ether ketone)s, wherein a melt-pressed film of 50-500 micrometer (µm) thickness, or 300 µm thickness, can be folded 180 degrees more than 3 times without breaking.

According to another preferred embodiment the invention discloses polyisoindolinones, in particular the poly(isoindolinone ether ether ketone)s, wherein a melt-pressed film of 50-500 µm thickness, or 300 µm thickness, can be folded 180 degrees greater than 3 times without breaking after autoclaving for 3 days at 130°C.

According to another preferred embodiment the invention discloses polyisoindolinones, in particular the poly(isoindolinone ether ether ketone)s, having a modulus of greater than 1000 MPa at 150-300 °C, as measured by ASTM D5418, on a film having a thickness of 150-500 µm or 300 µm.

A 150-500 µm-thick, or 300 µm-thick molded sample of the polymer compositions has at least 70% transmission at 850 nm, 1310 nm, or 1550 nm; or a 150-500 µm-thick molded sample of the polymer compositions has greater than 70% transmission as measured using the color space CIE1931 (Illuminant C and a 2° observer).

The polyisoindolinones, in particular the poly(isoindolinone ether ether ketone)s, can be used to form compositions, including composites, and articles.

The compositions can comprise the polyisoindolinones, in particular the poly(isoindolinone ether ether ketone) and an additive, a filler, a reinforcing agent, or a combination comprising at least one of the foregoing.

An additive composition comprising one or more additives selected to achieve a desired property can be present in the polyisoindolinone composition, with the proviso that the additives are also selected so as to not significantly adversely affect a desired property of the polyisoindolinone composition. Additives that have high temperature resistance and low volatility are preferred. In some embodiments, the additives are selected to have a molecular weight of above 500 g/mol. The additive composition or individual additives can be mixed at a suitable time during the mixing of the components for forming the composition. The additive can be soluble or non-soluble in the polyisoindolinone. an anti-drip agent (e.g., a PTFE-encapsulated styrene-acrylonitrile copolymer (TSAN)), anti-fog agent, antimicrobial agent, antioxidant, antistatic agent, blowing agent, colorant (e.g, a dye or pigment), flame retardant, flow modifier, heat stabilizer, impact modifier, light stabilizer, lubricant, nucleating agent, plasticizer, processing aid, release agent (such as a mold release agent), surface effect additive, radiation stabilizer, ultraviolet light stabilizer, ultraviolet light absorber, or a combination comprising one or more of the foregoing. In general, each additive is used in an amount generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

Specific colorants (pigments) that can be used include titanium dioxide and carbon black. In some embodiments, particularly in compositions have a crystalline phase, nucleating agents such as talc, clay, silica, carbon black, metal salts of long-chain (C16 or higher) carboxylic acids (e.g., sodium stearate, calcium oleate, potassium behenate, aluminum stearate and the like) or any combination thereof may be added. In some embodiments 0.1 to 1.0% of talc with particle size of less than 5 µm is preferred.

The polyisoindolinones and the compositions comprising the polyisoindolinones and an additive can be used in the manufacture of a composite. Composites generally contain a polymer composition and a reinforcing agent. As is known in the art, some overlap exists between materials that can be used as fillers and those that can be used as reinforcing agents. In some embodiments a material can function as both a filler and a reinforcing agent. The following lists of fillers and reinforcing agents are exemplary only, and not intended to be exclusive.

Possible fillers include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂ (which can also be used as a pigment), aluminum oxide, magnesium oxide, or the like; calcium sulfate (as its anhydride, dihydrate or trihydrate); calcium carbonates such as chalk, limestone, marble, synthetic precipitated calcium carbonates, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymer matrix, or the like; sulfides such as molybdenum sulfide, zinc sulfide or the like; barium compounds such as barium titanate, barium ferrite, barium sulfate, heavy spar, or the like; particulate organic fillers such as polytetrafluoroethylene, polyimides, or the like; and mica, clay, feldspar, flue dust, fillite, quartz, quartzite, perlite, tripoli, diatomaceous earth, carbon black, or the like. A combination of two or more fillers can be used.

Possible reinforcing agents include, for example, talc, including fibrous, modular, needle shaped, lamellar talc, or the like; mica; clays, including exfoliated nanoclays; single crystal fibers or "whiskers" such as silicon carbide, aluminum oxide, boron carbide, iron, nickel, copper, or the like; fibers (including continuous and chopped fibers) such as asbestos, carbon fibers, glass fibers, such as E, A, C, ECR, R, S, D, or NE glasses, or the like; metals and metal oxides such as fibrous aluminum, bronze, zinc, copper and nickel or the like; flaked fillers such as glass flakes, flaked silicon carbide, aluminum diboride, aluminum flakes, steel flakes or the like; inorganic fibrous materials, for example short inorganic fibers such as potassium titanate fiber, gypsum fiber, aluminum oxide fiber, magnesium oxide fiber, aluminum silicate fiber, and those derived from blends comprising at least one of aluminum silicates, aluminum oxides, magnesium oxides, and calcium sulfate hemihydrate or the like; or reinforcing organic fibers formed from high temperature organic polymers capable of forming fibers such as polyimides, poly(para-phenylene terephthalamide), or the like. A combination of two or more reinforcing agents can be used.

In some embodiments the reinforcing agent can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

Preferred reinforcing agents are fibrous, and include glass fibers (such as E, A, C, ECR, R, S, D, or NE glasses), carbon fiber, polyaramide fiber, poly(p-phenylene-2,6-benzobisoxazole) fiber, carbon microfiber, carbon nanofiber, potassium titanate fiber, gypsum fiber, aluminum oxide fiber, aluminum silicate fiber, magnesium oxide fiber, or a combination comprising at least one of the foregoing fibers.

The fillers and reinforcing agents can be coated with a layer of metallic material to facilitate conductivity, or surface-treated with silanes to improve adhesion and dispersion with the polymer matrix. Fillers and reinforcing agents can be generally used in amounts of 10 to 200 parts by weight, based on 100 parts by weight of the polymer.

The polyisoindolinones and compositions comprising the polyisoindolinones, including composites, can be used for the manufacture of a wide variety of articles. The article can be in the form of a molded article, a layer (including a sheet or a film), one or more layers of a multilayer (which can contain sheets, films, or a combination thereof), an extruded article, a coating, a pellet, a powder, a foam, a tubing, a fiber, or a flake.

Such articles can be formed by a variety of methods, including molding (e.g., injection molding, blow molding, rotational molding, compression molding, transfer molding, and the like) thermoforming, casting, (e.g. spin-casting, vacuum casting, or dip casting, wax model casting,), pelletizing, coating, fiber spinning, extruding (including to form pellets or a profile), precipitating, 3D printing, and the like.

The articles can be used in a wide variety of applications, including electronic, medical, transportation, and construction.

Examples of articles include, but are not limited to, an optical lens, a site glass (also called a water gauge), optical fiber connector, an electrical connector, a light-emitting diode reflector, a printed circuit board substrate, a reflector for automotive headlamp, a component of a fuel system for a gasoline engine, or a diesel engine, an aircraft jet engine, or an aircraft turboprop engine, a fuel bowl, a fuel filter housing, water pump, a housing for a computer monitor, a housing or a handheld electronic device such as a cell phone or tablet computer, a component of a lighting fixture, or a component of a home appliance, industrial appliance, roof, greenhouse, sun room, swimming pool enclosure, a film, a wire coating, or the like.

### EXAMPLES

### Methods

Unless indicated otherwise, all test methods in this application are those in effect on the earliest priority date of this application.

Differential scanning calorimetry was used to determine glass transition temperature (Tg) and melting point temperature (Tm) per ASTM test D3418. The test was performed using a TA Q1000 DSC instrument. In a typical procedure, a polymer sample (10-20 mg) was heated from 40 °C to 400 °C (20 °C/min), held at 400 °C for 1 min, cooled back to 40 °C (20 °C /min), then held at 40 °C for 1 min, and the above heating/cooling cycle was repeated. The second heating cycle is usually used to obtain the Tg and Tm.

The coefficient of thermal expansion (CTE) was analyzed to assess the dimensional stability of the polymers. The CTE was measured using a thermo-mechanical analysis (TMA) TA Q400 instrument with a temperature range of 50 °C to 170 °C, and 5 °C /min ramp rate. The CTE was calculated using the slope of a linear fit to the TMA curve between 50 °C and 170 °C. The CTE were measured on films produced according to ASTM E 831.

TGA measurements: Thermogravimetric analysis (TGA) measurements of the polymer film sample were performed with a TA Q800 TGA instrument. Separate samples were scanned from 40 °C-800 °C under the nitrogen and air atmosphere with a heating rate of 20 °C/min. This analysis was also used to determine the temperature of peak decomposition (also referred as the onset decomposition temperature).

Dynamic mechanical analysis (DMA) was performed on a TA instrument 2980 DMA, and the scanning temperature range was from 40 °C to 400 °C at a heating rate of 2 °C /min and at a frequency of 1 Hz. It was run using the Tensile Fixture. A three-point bending mode was employed and the specimen size was 10.0-15.0 × 3.0-5.0 × 0.15-0.40 mm. The storage modulus (G'), loss modulus (G") and tangent of loss angle (tanδ) were obtained as the function of scanning temperature.

Water uptake measurements: Samples of the cured polymer films were cut to a size of at least 2 centimeters x 2 centimeters and weighed. The weight was recorded as M1. The samples were dried in a vacuum oven at 140 °C for 24 hours. Following cooling to room temperature under vacuum, the samples were quickly weighed (recorded as M2) and immersed in DI water for 24 hours. The samples were removed from the water, wiped dry, and weighed again (recorded as M3). The water absorption was calculated using the formula: Water absorption (%) = (M3-M2)*100/M2.

Percent Transmission Measurement: The percent transmission of the polymer disc was measured using Perkin Elmer LAMBDA 950 across the 400 nm (UV) to 1600 nm (NIR) range. The discs used for measurement had thickness of 150-500 µm or 300 µm.

Solvent Resistance Test: The polymer film was cut to a size of 15 mm x 10 mm. The film was dried in a vacuum oven at 140 °C for 24 hours. Following cooling to a room temperature under vacuum, the sample was quickly weighed into a 20 mL scintillation vial (recorded as M3). The solvent was added (10 mL) to the vial. The vial was then placed on a shaker for 24 hours and the polymer sample was removed from the solvent. The film was then dried in vacuum oven at 140 °C to remove residual solvents and weighed again (recorded at M4) at room temperature. The percent loss of polymer was measured using the formula: % loss= (M3-M4)^{∗}100/M3.

Hydrostability Measurement by Fold Test: The polymer film obtained from melt-pressing having thickness 150-500 µm were cut to a size 80 millimeter (mm) x 50 mm, and were subjected to heating in an autoclave for 3 days at 130 °C. After exposure, the films were dried in an oven at 100 °C, and tested for mechanical properties by subjecting to a fold test. The fold performance was ranked based number of fold the film allows before it breaks at the crease. The ranking is as follows: Highly Creasable (HC) if more than 7 folds; Moderately Creasable (MC) if more than 3 but less than 7 folds, and Poorly Creasable (LC) if less than 3 folds before breaking.

### Synthesis and Results

Several compositions according to the present disclosure were synthesized in accordance with the Table, wherein the amount of each component is in weight percent.

In an exemplary procedure, a 500-mL, four-necked reaction kettle equipped with a mechanical stirrer, nitrogen inlet, and a condenser, was charged with 36.08 grams (0.1653 moles) of 4,4'-difluorobenzophenone, 65.00 grams (0.1653 moles) of 2-phenyl-3,3-bis(4-hydroxyphenyl)phthalimidine, and 125 grams of diphenyl sulfone. The flask was maintained under inert atmosphere. The reaction mixture was heated to 180°C to form a colorless, homogenous solution. Then, anhydrous potassium carbonate sieved through a 450 µm (µm) sieve (23.08 grams, 0.1679 moles) was added. The reaction content was then heated to 200°C, and maintained for 1 hour. The temperature was then increased to 250°C, and maintained there for 1 hour. Finally, the temperature was raised to 325 °C, and maintained for 1 hour. The light colored reaction mixture was then cooled (without end-stopping) and the resulting solid reaction product was milled into a fine powder. The polymer product was purified by washing with acetone (3x), water (3x), and methanol (2x). The resulting polymer powder was dried at 140° C under vacuum oven.

Films comprising the polymers of the Examples were made by melt-pressing a polymer sample at a temperature above 350 °C using Automatic Bench Top Lab Press from Carver, Inc. Films were dried in an oven at 100 °C before testing.

Results are shown in the Table, together with results of two comparative compositions, a high heat polycarbonate copolymer, and a PEEK.

| **Component** | | **Example 1** | **Example 2** | **Example 3** | **Poly carbonate copolymer*** | **PEEK**** |
|---|---|---|---|---|---|---|
| Hydroquinone | | 90 | 50 | 0 | - | - |
| N-phenyl phenolphthalein (PPPBP) | | 10 | 50 | 100 | - | - |
| **Properties** | | | | | | |
| Tm (°C) | | 318 | ND | ND | ND | 343 |
| Tg (°C) by DSC | | 163 | 212 | 248 | 190 | 143-147 |
| TGA (Onset T, °C) | Air | 520 | 484 | 483 | 504 | 591 |
| | N₂ | 546 | 496 | 488 | 503 | 594 |
| Char yield (TGA in N₂, 800 °C) | | 51 | 47 | 52 | 69 | 51 |
| Hydrostability (130 °C, autoclave) | | HC | HC | MC | MC | HC |
| CTE (µm/(m.°C) | | 55.22 | 42.26 | 49.87 | 70 | 50-140 |
| Water absorption (23 °C, sat) (%) | | 1.55 | 3.00 | 2.67 | 0.50 | 0.45 |
| %T at 1550 nm | | 85.07 | 81.06 | 76.17 | 87.59 | 45.09 |
| %T at 1310 nm | | 84.65 | 81.13 | 73.27 | 87.18 | 40.98 |
| %T at 850 nm | | 81.62 | 81.72 | 55.39 | 87.17 | 23.77 |
| Film Thickness (µm) | | 211 | 345 | 437 | 421 | 770 |
| Solubility in dichloromethane | | <1 | - | <20 | SOL | <1 |
| Solubility in chloroform | | <3 | - | <20 | SOL | <1 |
| Solubility in o-dichlorobenzene | | <1 | - | <3 | SOL | <1 |

| | | | | | | |
|---|---|---|---|---|---|---|
| * Bisphenol A-PPPBP copolymer from SABIC; ** PEEK 150G from VICTREX ND= Not Detected; SOL= Soluble | | | | | | |

FIG. 1 shows the modulus versus temperature of the above examples.

The singular forms "a," "an," and "the" include plural referents unless the context clearly dictates otherwise. "Or" means "and/or." The endpoints of all ranges directed to the same component or property are inclusive and independently combinable. Unless defined otherwise, technical and scientific terms used herein have the same meaning as is commonly understood by one of skill in the art to which this invention belongs. As used herein, a "combination" is inclusive of blends, mixtures, alloys, reaction products, and the like.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" and "hydrocarbon" refers broadly to a substituent comprising carbon and hydrogen, optionally with 1 to 3 heteroatoms, for example, oxygen, nitrogen, halogen, silicon, sulfur, or a combination thereof; "alkyl" is a straight or branched chain, saturated monovalent hydrocarbon group; "alkylene" is a straight or branched chain, saturated, divalent hydrocarbon group; "alkylidene" is a straight or branched chain, saturated divalent hydrocarbon group, with both valences on a single common carbon atom; "alkenyl" is a straight or branched chain monovalent hydrocarbon group having at least two carbons joined by a carbon-carbon double bond; "cycloalkyl" is a non-aromatic monovalent monocyclic or multicyclic hydrocarbon group having at least three carbon atoms; "cycloalkylene" is a divalent group formed by the removal of two hydrogen atoms from two different carbon atoms on one or more rings of a cycloalkyl group; "aryl" is an aromatic monovalent group containing only carbon in the aromatic ring or rings; "arylene" is an aromatic divalent group containing only carbon in the aromatic ring or rings; "alkylarylene" is an aryl group that has been substituted with an alkyl group as defined above, with 4-methylphenyl being an exemplary alkylarylene group; "arylalkylene" is an alkyl group that has been substituted with an aryl group as defined above, with benzyl being an exemplary arylalkylene group; "acyl" is an alkyl group as defined above with the indicated number of carbon atoms attached through a carbonyl carbon bridge (-C(=O)-); "alkoxy" is an alkyl group as defined above with the indicated number of carbon atoms attached through an oxygen bridge (-O-); and "aryloxy" is an aryl group as defined above with the indicated number of carbon atoms attached through an oxygen bridge (-O-).

The term "substituted" as used herein means that at least one hydrogen on the designated atom or group is replaced with another group, provided that the designated atom's normal valence is not exceeded, and that the substitution does not significantly adversely affect synthesis or use of the polymers. Combinations of substituents are permissible, again provided that the substitutions do not significantly adversely affect synthesis or use of the polymers. Groups that can be present on a substituted position include (-NO₂), cyano (-CN), C₂₋₆ alkanoyl (e.g., acyl (H₃CC(=O)-); C₁₋₆ or C₁₋₃ alkyl; C₃₋₈ or C₃₋₆ cycloalkyl; C₂₋₆ or C₂₋₄ alkenyl; C₂₋₆ or C₂₋₄ alkynyl; C₁₋₆ or C₁₋₃ alkoxy; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic ring (e.g., phenyl, biphenyl, naphthyl, or the like, each ring either substituted or unsubstituted aromatic); C₇₋₁₉ arylalkylene having 1 to 3 separate or fused rings and from 6 to 18 ring carbon atoms (e.g, benzyl); or arylalkoxy having 1 to 3 separate or fused rings and from 6 to 18 ring carbon atoms. The indicated number of carbon atoms includes any substituents.

## Claims

1. A polyisoindolinone comprising
1-100 mole percent, preferably 5-100 mole percent, of isoindolinone ether ketone units of the formula 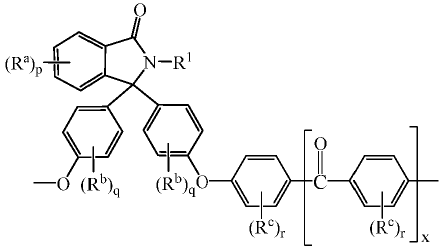 wherein
each R¹ is independently the same or different, and is hydrogen, C₁₋₈ alkyl, C₃₋₈ cycloalkyl, or phenyl optionally substituted with 1-5 C₁₋₆ alkyl groups,
each R^{a} is independently the same or different, and is C₁₋₆ alkyl,
each R^{b} is independently the same or different, and is C₁₋₁₂ alkyl, C₂₋₁₂ alkenyl, C₃₋₈ cycloalkyl, or C₁₋₁₂ alkoxy,
each R^{c} is independently the same or different, and is C₁₋₁₂ alkyl, C₂₋₁₂ alkenyl, C₃₋₈ cycloalkyl, or C₁₋₁₂ alkoxy,
each p, q, and r is independently the same or different, and is an integer of 0-4, preferably 0-2, and
x is an integer of 1-4, preferably 1-3, preferably 1 or 2; and
0-99 mole percent, preferably 0-95 mole percent, more preferably 1-95 mole percent, even more preferably 5-90 mole percent, of arylene ether ketone units of the formula 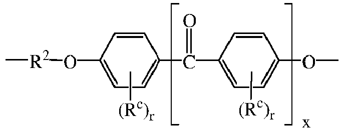 wherein
each R² is independently the same or different, and is a C₆₋₃₀ substituted or unsubstituted arylene,
each R^{c} is independently the same or different, and is C₁₋₁₂ alkyl, C₂₋₁₂ alkenyl, C₃₋₈ cycloalkyl, or C₁₋₁₂ alkoxy,
each r is independently the same or different, and is an integer of 0-4, preferably 0-2, and
x is an integer of 1-4, preferably 1-3, preferably 1 or 2; and
wherein when the polyisoindolinone is a poly(isoindolinone ether ether ketone), it has a least one, preferably at least two, preferably all of the following properties:
a glass transition temperature greater than 150 °C, or 150-270 °C as determined by differential scanning calorimetry,
less than 25 weight percent solubility at 23 °C in dichloromethane, orthodichlorobenzene, or chloroform, or
substantially no blue phosphorescence in response to irradiation with ultraviolet light of 320-400 nm.

2. The polyisoindolinone of claim 1, further having at least one, at least two, at least three, or all of the following properties:
less than 25 ppm of benzylic protons of the polyisoindolinone;
a hydroxyl polymer end group content of less than 700 parts per million by weight of the polyisoindolinone;
a halogen content of less than 900 parts per million by weight of the polyisoindolinone;
a residual alkali or alkaline earth metal cation content of less than 500 parts per million by weight of the polyisoindolinone;
a residual solvent content of less than 500 parts per million by weight of the polyisoindolinone.

3. The polyisoindolinone of any one or more of the preceding claims, further having at least one, at least two, or all of the following properties:
an onset decomposition temperature of greater than 485°C as determined using thermogravimetric analysis in air and nitrogen;
a coefficient of thermal expansion of 30-90 ppm/°C, or 30-60 ppm/°C, or 40-60 ppm/°C, as determined according to ASTM E 831;
10% or higher crystallinity, as determined using differential scanning calorimetry on the second heat cycle, wherein heating and cooling is at a rate of 20 °C/minute for both heating and cooling cycles.

4. The polyisoindolinone of any one or more of the preceding claims, wherein:
a 300 micrometer-thick film of the polyisoindolinone has at least 70% transmission at 850 nm, 1310 nm, or 1550 nm as measured on an ultraviolet-visible/near infrared spectrophotometer; or
a 300 micrometer-thick film sample has greater than 70% transmission as measured using the color space CIE1931 (Illuminant C and a 2° observer).

5. The polyisoindolinone of any one or more of the preceding claims, further having at least one, or at least two of the following properties:
a water uptake of less than 3 percent, preferably less than 1 percent, most preferably less than 0.6 percent at 23 °C, after 24 hours by direct immersion;
a shift in melt viscosity of less than 30 % over 30 min at 380 C under a nitrogen atmosphere as measured in a small amplitude oscillatory time sweep rheology at a fixed angular frequency of 10 radians/second; or
a char yield of greater than 30 weight percent, as determined using thermogravimetric analysis under inert atmosphere of nitrogen.

6. The polyisoindolinone of any one or more of the preceding claims,
wherein a melt-pressed film of 300 micrometer thickness can be folded 180 degrees greater than 3 times without breaking; or
wherein a melt-pressed film of 300 micrometer thickness can be folded 180 degrees greater than 3 times without breaking after autoclaving for 3 days at 130°C; or
having a modulus of greater than 1000 MPa at 150-300 °C, as measured by ASTM D5418, on a 300 µm-thick film sample.

7. The polyisoindolinone of any one or more of the preceding claims, wherein
R¹ is hydrogen, C₁₋₆ alkyl, C₃₋₆ cycloalkyl, or phenyl optionally substituted with 1-3 C₁₋₆ alkyl groups;
R^{a} is C₁₋₄ alkyl;
each R^{b} is independently the same or different, and is C₁₋₆ alkyl, C₂₋₆ alkenyl, C₃₋₆ cycloalkyl, or C₁₋₆ alkoxy;
each R^{c} is independently the same or different, and is C₁₋₆ alkyl, C₂₋₆ alkenyl, C₃₋₈ cycloalkyl, or C₁₋₁₂ alkoxy;
each R^{c} is independently the same or different, and is C₁₋₆ alkyl, C₂₋₆ alkenyl, C₃₋₆ cycloalkyl, or C₁₋₆ alkoxy;
each p, q, r, and t is independently the same or different, and is an integer of 0 or 1, preferably 0;
each x is independently the same or different, and is an integer of 1-4, preferably 1-3, more preferably 1 or 2; and
R² is a C₆₋₃₀ substituted or unsubstituted arylene of the formula 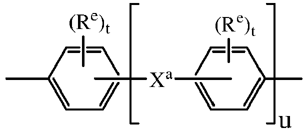 wherein
each R^{e} is independently the same or different, and is C₁₋₁₂ alkyl, C₂₋₆ alkenyl, C₃₋₆ cycloalkyl, or C₁₋₆ alkoxy,
each t is independently the same or different, and is an integer of 0-4,
each u is independently the same or different, and is an integer of 0-4, preferably 0 or 1, and
each X^{a} is independently a single bond, -O-, -S-, -S(=O)-, -S(=O)₂-, -C(=O)-, -P(R)(=O)-wherein R is a C₁₋₈ alkyl or C₆₋₁₂ aryl, or a C₁₋₁₈ organic bridging group;
preferably wherein R² is derived from *p*-hydroquinone, methyl hydroquinone, dimethyl hydroquinone, tert-butyl hydroquinone, di-tert-butyl hydroquinone, resorcinol, 4,4'-biphenol, 4,4'-dihydroxydiphenyl ether, 4,4'-isopropylidenediphenol, 4,4'-(hexafluoroisopropylidene)diphenol, bis(3,5-dimethyl-4-hydroxyphenyl)isopropylidene,bis(4-hydroxyphenyl) sulfoxide, bis(4-hydroxyphenyl) sulfone, bis(4-hydroxyphenyl) sulfide, *b*is(3,5-dimethyl-4-hydroxyphenyl) sulfone, 4,4'-(1-phenylethylidene)bisphenol, 4,4'-dihydroxybenzophenone, 1,4-bis-(p-hydroxybenzoyl)benzene, 1,3-bis-(p-hydroxybenzoyl)benzene, or a combination comprising at least one of the foregoing.

8. A method of manufacturing the polyisoindolinone of any one or more of the preceding claims, the method comprising polymerizing
a dihydric monomer composition comprising, based on the total weight of the monomer composition:
1-100 mole percent, preferably 5-100 mole percent, of a dihydroxy isoindolinone of the formula: 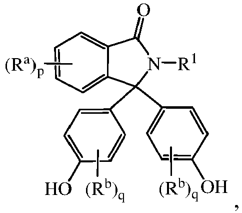 and
0-99 mole percent, preferably 0-95 mole percent, of a dihydroxy arylene compound of the formula
HO-R²-OH,
with a dihalogenated compound of the formula 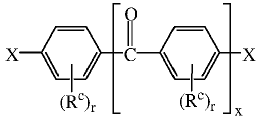 wherein each X is independently the same or different, and is a halogen, preferably fluorine, chlorine, or bromine, or a combination comprising at least one of the foregoing,
in a liquid-phase polymerization mixture further comprising an organic solvent for the dihydroxy monomer composition and the dihalogenated compound, under conditions sufficient to effect the polymerization.

9. The method of claim 8, further comprising forming a dialkali or alkaline earth metal salt composition in situ by reacting the dihydroxy isoindolinone compound, the dihydroxy arylene compound, or both, with an alkali or alkaline earth metal source under conditions effective to form the corresponding dialkali or alkaline earth metal salts, preferably wherein the alkali or alkaline earth metal is provided in an amount of 0.5-1.05 molar equivalent per mole of phenolic group.

10. The method of claim 9, wherein the polymerizing comprises
dehydrating the alkali or alkaline earth metal salt composition to remove water by one or more of azeotropic distillation in the presence of suitable co-solvent or in the presence of inert gas atmosphere sweep, preferably nitrogen, argon, or a combination comprising at least one of the foregoing; then
heating the polymerization mixture to a temperature greater than 100 °C, and less than the decomposition temperature of the reactants, the solvent, and the polymer; and
preferably heating the polymerization mixture from 200-350 °C until the resultant polyisoindolinone has a hydroxyl polymer end content of less than 700 parts per million by weight or a halogen content of less than 900 parts per million by weight of the polymer, or a molecular weight change of less than 500 Daltons/hour.

11. The method of any one or more of claims 8-10, wherein
the polymerizing is in the presence of an end capping agent, preferably 1.5-4 mole percent of an end capping agent, based on the total moles of the dihydric monomer composition; and
the end capping agent is added at the beginning, during, or at the end of the polymerization, more preferably the end capping agent is added at the beginning or during the polymerization.

12. The method of any one or more of claims 8-11, wherein the dihydroxy isoindolinone has less than 1000 parts per million by weight each of
a monoaminophenol of the formula 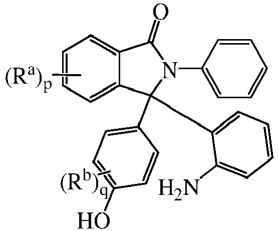 or
a phenolphthalein compound of the formula 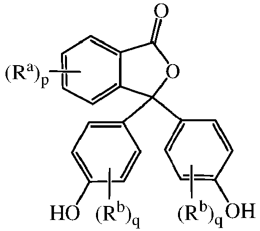 each as determined by liquid chromatography analysis.

13. A composition comprising
the polyisoindolinone of any one or more of claims 1-7, or the polyisoindolinone made by the method of any one or more of claims 8-12; and
an additive, particulate filler, reinforcing agent, or a combination comprising at least one of the foregoing.

14. An article comprising the polyisoindolinone of any one or more of claims 1-7, or the polyisoindolinone made by the method of any one or more of claims 8-12, or the composition of claim 13,
preferably wherein the article is a molded article, a layer, one or more layers of a multilayer, an extruded article, a coating, a pellet, a powder, a foam, a tubing, a fiber, or a flake;
preferably wherein the article is an optical lens, a site glass, optical fiber connector, an electrical connector, a light-emitting diode reflector, a printed circuit board substrate, a reflector for automotive headlamp, a component of a fuel system for a gasoline engine, or a diesel engine, an aircraft jet engine, or an aircraft turboprop engine, a fuel bowl, or a fuel filter housing.

15. A method of forming the article of claim 14, comprising shaping, extruding, molding, or injection molding the polyisoindolinone of any one or more of claims 1-7, or the polyisoindolinone made by the method of any one or more of claims 8-12, or the composition of claim 13.

## Patentansprüche

1. Ein Polyisoindolinon, das Folgendes umfasst:
1-100 Molprozent, vorzugsweise 5-100 Molprozent, Isoindolinonetherketoneinheiten mit der Formel 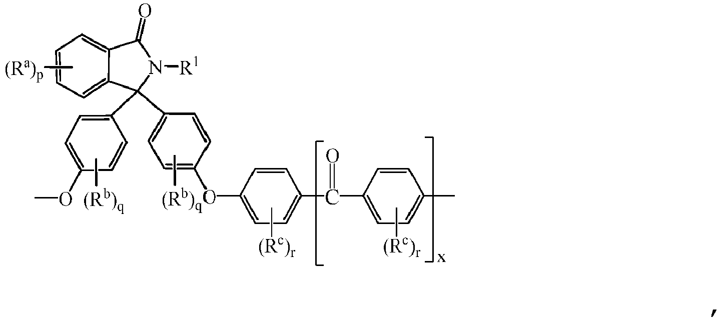 worin
jedes R¹ unabhängig gleich oder unterschiedlich ist und Wasserstoff, C₁₋₈-Alkyl, C₃₋₈-Cycloalkyl oder Phenyl, wahlweise substituiert mit 1-5 C₁₋₆-Alkylgruppen, ist,
jedes R^{a} unabhängig gleich oder unterschiedlich ist und C₁₋₆-Alkyl ist,
jedes R^{b} unabhängig gleich oder unterschiedlich ist und C₁₋₁₂-Alkyl, C₂₋₁₂-Alkenyl, C₃₋₈-Cycloalkyl oder C₁₋₁₂-Alkoxy ist,
jedes R^{c} unabhängig gleich oder unterschiedlich ist und C₁₋₁₂-Alkyl, C₂₋₁₂-Alkenyl, C₃₋₈-Cycloalkyl oder C₁₋₁₂-Alkoxy ist,
jedes p, q und r unabhängig gleich oder unterschiedlich ist und eine ganze Zahl von 0-4, vorzugsweise 0-2, ist, und
x eine ganze Zahl von 1-4, vorzugsweise 1-3, vorzugsweise 1 oder 2, ist; und
0-99 Molprozent, vorzugsweise 0-95 Molprozent, stärker bevorzugt 1-95 Molprozent, noch stärker bevorzugt 5-90 Molprozent, von Arylenetherketoneinheiten mit der Formel 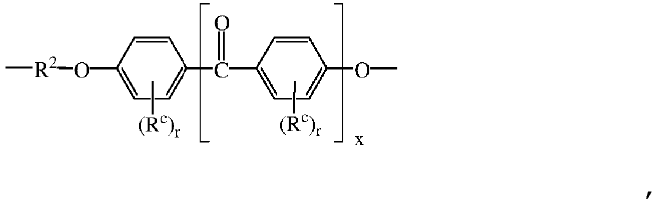 worin
jedes R² unabhängig gleich oder unterschiedlich ist und ein substituiertes oder unsubstituiertes C₆₋₃₀-Arylen ist,
jedes R^{c} unabhängig gleich oder unterschiedlich ist und C₁₋₁₂-Alkyl, C₂₋₁₂-Alkenyl, C₃₋₈-Cycloalkyl oder C₁₋₁₂-Alkoxy ist,
jedes r unabhängig gleich oder unterschiedlich ist und eine ganze Zahl von 0-4, vorzugsweise 0-2, ist, und
x eine ganze Zahl von 1-4, vorzugsweise 1-3, vorzugsweise 1 oder 2, ist; und
wobei das Polyisoindolinon, wenn es ein Poly(isoindolinonetheretherketon) ist, mindestens eine, vorzugsweise mindestens zwei, vorzugsweise alle der folgenden Eigenschaften hat:
eine Glasübergangstemperatur von über 150°C, oder 150-270°C, bestimmt durch Differentialscanningkalorimetrie,
weniger als 25 Gewichtsprozent Löslichkeit bei 23°C in Dichlormethan, Orthodichlorbenzen oder Chloroform, oder
im Wesentlichen keine blaue Phosphoreszenz als Reaktion auf Bestrahlung mit ultraviolettem Licht von 320-400 nm.

2. Das Polyisoindolinon gemäß Anspruch 1, das weiter mindestens eine, mindestens zwei, mindestens drei oder alle der folgenden Eigenschaften hat:
weniger als 25 ppm benzylische Protonen des Polyisoindolinons;
einen Hydroxylpolymer-Endgruppengehalt von weniger als 700 Teilen je Million Teile nach Gewicht des Polyisoindolinons;
einen Halogengehalt von weniger als 900 Teilen je Million Teile nach Gewicht des Polyisoindolinons;
einen Rest-Alkali- oder Erdalkalimetall-Kationengehalt von weniger als 500 Teilen je Million Teile nach Gewicht des Polyisoindolinons;
einen Rest-Lösungsmittelgehalt von weniger als 500 Teilen je Million Teile nach Gewicht des Polyisoindolinons.

3. Das Polyisoindolinon gemäß einem beliebigen oder mehreren der obigen Ansprüche, das weiter mindestens eine, mindestens zwei oder alle der folgenden Eigenschaften hat:
eine Zersetzungsbeginntemperatur von mehr als 485°C, bestimmt durch thermogravimetrische Analyse in Luft und Stickstoff;
einen Wärmeausdehnungskoeffizienten von 30-90 ppm/°C, 30-60 ppm/°C oder 40-60 ppm/°C, bestimmt nach ASTM E 831;
eine Kristallinität von 10% oder höher, bestimmt durch Differentialscanningkalorimetrie im zweiten Erwärmungszyklus, wobei Erwärmung und Abkühlung mit einer Rate von 20°C/Minute, sowohl für den Erwärmungs- als auch für den Kühlungszyklus, stattfinden.

4. Das Polyisoindolinon gemäß einem beliebigen oder mehreren der obigen Ansprüche, wobei
ein 300 Mikrometer dicker Film des Polyisoindolinons mindestens 70% Durchlässigkeit bei 850 nm, 1310 nm oder 1550nm hat, gemessen in einem Spektralphotometer für den Ultraviolett-sichtbaren/nahen Infrarotbereich; oder
eine 300 Mikrometer dicke Filmprobe mehr als 70% Durchlässigkeit hat, gemessen unter Verwendung des Farbraums CIE1931 (Leuchtmittel C und ein 2° Betrachter).

5. Das Polyisoindolinon gemäß einem beliebigen oder mehreren der obigen Ansprüche, das weiter mindestens eine oder mindestens zwei der folgenden Eigenschaften hat:
eine Wasseraufnahme von weniger als 3 Prozent, vorzugsweise weniger als 1 Prozent, am stärksten bevorzugt weniger als 0,6 Prozent, bei 23°C nach 24 Stunden durch direktes Eintauchen;
eine Verschiebung in der Schmelzviskosität von weniger als 30% über 30 min bei 380°C unter einer Stickstoffatmosphäre, gemessen in einer oszillatorischen Sweepzeit-Rheologie mit geringer Amplitude bei einer festen Winkelfrequenz von 10 Bogenmaß/Sekunde; oder
eine Koksausbeute von mehr als 30 Gewichtsprozent, bestimmt durch thermogravimetrische Analyse unter einer inerten Stickstoffatmosphäre.

6. Das Polyisoindolinon gemäß einem beliebigen oder mehreren der obigen Ansprüche,
wobei ein schmelzgepresster Film mit einer Dicke von 300 Mikrometern mehr als 3-mal um 180° geknickt werden kann, ohne zu brechen; oder
wobei ein schmelzgepresster Film mit einer Dicke von 300 Mikrometern nach 3-tägigem Autoklavieren bei 130°C mehr als 3-mal um 180° geknickt werden kann, ohne zu brechen; oder
mit einem Modul von mehr als 1000 MPa bei 150-300°C, gemessen nach ASTM D5418 an einer 300 pm dicken Filmprobe.

7. Das Polyisoindolinon gemäß einem beliebigen oder mehreren der obigen Ansprüche, worin
R¹ Wasserstoff, C₁₋₆-Alkyl, C₃₋₆-Cycloalkyl oder Phenyl, wahlweise substituiert mit 1-3 C₁₋₆-Alkylgruppen, ist;
R^{a} C₁₋₄-Alkyl ist;
jedes R^{b} unabhängig gleich oder unterschiedlich ist und C₁₋₆-Alkyl, C₂₋₆-Alkenyl, C₃₋₆-Cycloalkyl oder C₁₋₆-Alkoxy ist;
jedes R^{c} unabhängig gleich oder unterschiedlich ist und C₁₋₆-Alkyl, C₂₋₆-Alkenyl, C₃₋₈-Cycloalkyl oder C₁₋₁₂-Alkoxy ist;
jedes R^{c} unabhängig gleich oder unterschiedlich ist und C₁₋₆-Alkyl, C₂₋₆-Alkenyl, C₃₋₆-Cycloalkyl oder C₁₋₆-Alkoxy ist;
jedes p, q, r und t unabhängig gleich oder unterschiedlich ist und eine ganze Zahl von 0 oder 1, vorzugsweise 0, ist;
jedes x unabhängig gleich oder unterschiedlich ist und eine ganze Zahl von 1-4, vorzugsweise 1-3, stärker bevorzugt 1 oder 2, ist; und
R² ein substituiertes oder unsubstituiertes C₆₋₃₀-Arylen mit folgender Formel ist: 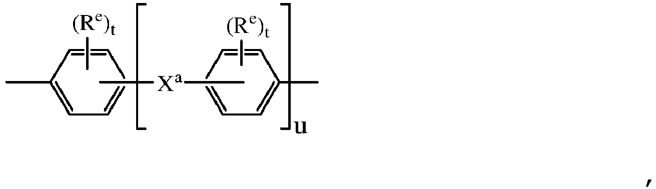 worin
jedes R^{e} unabhängig gleich oder unterschiedlich ist und C₁₋₁₂-Alkyl, C₂₋₆-Alkenyl, C₃₋₆-Cycloalkyl oder C₁₋₆-Alkoxy ist;
jedes t unabhängig gleich oder unterschiedlich und eine ganze Zahl von 0-4 ist;
jedes u unabhängig gleich oder unterschiedlich und eine ganze Zahl von 0-4, vorzugsweise 0 oder 1, ist; und
jedes X^{a} unabhängig eine Einfachbindung, -O-, -S-, -S(=O)-,-S(=O)₂-, -C(=O)-, -P(R)(=O)- ist,
worin R ein C₁₋₈-Alkyl oder C₆₋₁₂-Aryl oder eine organische überbrückende C₁₋₁₈-Gruppe ist,
wobei R² vorzugsweise abgeleitet ist von p-Hydrochinon, Methylhydrochinon, Dimethylhydrochinon, tert-Butylhydrochinon, di-tert-Butylhydrochinon, Resorcinol, 4,4'-Bisphenol, 4,4'-Dihydroxydiphenylether, 4,4'-Isopropylendiphenol, 4,4'-(Hexafluorisopropyliden)diphenol, Bis(3,5-dimethyl-4-hydroxyphenyl)isopropyliden, Bis(4-hydroxyphenyl)sulfoxid, Bis(4-hydroxyphenyl)sulfon, Bis(4-Hydroxyphenyl)sulfid, *Bis*(3,5-dimethyl-4-hydroxyphenyl)sulfon, 4,4'-(1-Phenylethyliden)bisphenol, 4,4'-Dihydroxybenzophenon, 1,4-Bis-(p-hydroxybenzoyl)benzen, 1,3-Bis-(p-hydroxybenzoyl)benzen oder einer Kombination, die mindestens eines der oben Genannten umfasst.

8. Ein Verfahren zur Herstellung des Polyisoindolinons gemäß einem beliebigen oder mehreren der obigen Ansprüche, wobei das Verfahren das Polymerisieren von Folgendem umfasst:
einer zweiwertigen Monomerzusammensetzung, die, basierend auf dem Gesamtgewicht der Monomerzusammensetzung, Folgendes umfasst:
1-100 Molprozent, vorzugsweise 5-100 Molprozent, eines Dihydroxyindolinons mit der Formel: 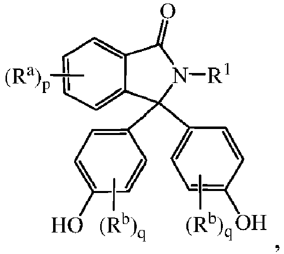 und
0-99 Molprozent, vorzugsweise 0-95 Molprozent, einer Dihydroxyarylenverbindung mit der Formel
HO-R²-OH;
mit einer dihalogenierten Verbindung mit der Formel 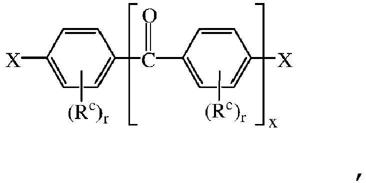 worin jedes X unabhängig gleich oder unterschiedlich ist und ein Halogen, vorzugsweise Fluor, Chlor oder Brom oder eine Kombination ist, die mindestens eines der oben Genannten umfasst;
in einer Flüssigphasen-Polymerisationsmischung, die weiter ein organisches Lösungsmittel für die Dihydroxymonomerzusammensetzung und die dihalogenierte Verbindung umfasst; unter Bedingungen, die ausreichen, um die Polymerisation zu bewirken.

9. Das Verfahren gemäß Anspruch 8, das weiter das In-situ-Formen einer Dialkali- oder Erdalkalimetallsalzzusammensetzung umfasst, durch Reagieren der Dihydroxyisoindolinonverbindung, der Dihydroxyarylenverbindung oder beider mit einer Alkali- oder Erdalkalimetallquelle unter Bedingungen, die wirksam sind, um die entsprechenden Dialkali- oder Erdalkalimetallsalze zu bilden, wobei das Alkali- oder Erdalkalimetall vorzugsweise in einer Menge von 0,5-1,05 molarem Äquivalent pro mol der phenolischen Gruppe bereitgestellt wird.

10. Das Verfahren gemäß Anspruch 9, wobei die Polymerisation Folgendes umfasst:
das Trocknen der Alkali- oder Erdalkalimetallsalzzusammensetzung zum Entfernen von Wasser durch eine oder mehrere von azeotroper Destillation in Anwesenheit von geeignetem Zusatzlösungsmittel oder in Anwesenheit eines Sweeps unter Schutzgasatmosphäre, vorzugsweise mit Stickstoff, Argon oder einer Kombination, die mindestens eines der oben Genannten umfasst; dann
das Erhitzen der Polymerisationsmischung auf eine Temperatur über 100°C, unterhalb der Zersetzungstemperatur der Reaktionsmittel, des Lösungsmittels und des Polymers; und
vorzugsweise das Erhitzen der Polymerisationsmischung von 200-350°C, bis das resultierende Polyisoindolinon einen Hydroxylpolymerendgehalt von weniger als 700 Teilen je Million Teile nach Gewicht oder einen Halogengehalt von weniger als 900 Teilen je Million Teile nach Gewicht des Polymers oder eine Änderung des Molekulargewichts von weniger als 500 Dalton/Stunde hat.

11. Das Verfahren gemäß einem beliebigen oder mehreren der Ansprüche 8-10, worin
die Polymerisation in Anwesenheit eines Endcapping-Mittels, vorzugsweise 1,5-4 Molprozent eines Endcapping-Mittels, basierend auf den Gesamtmol der zweiwertigen Monomerzusammensetzung, stattfindet; und
das Endcapping-Mittel zu Beginn, während oder am Ende der Polymerisation hinzugefügt wird; stärker bevorzugt wird das Endcapping-Mittel zu Beginn oder während der Polymerisation hinzugefügt.

12. Das Verfahren gemäß einem beliebigen oder mehreren der Ansprüche 8-11, worin das Dihydroxyisoindolinon weniger als 1000 Teile je Million Teile nach Gewicht von jedem von
einem Monoaminophenol mit der Formel 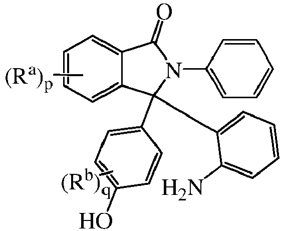 oder
einer Phenolphthaleinverbindung mit der Formel 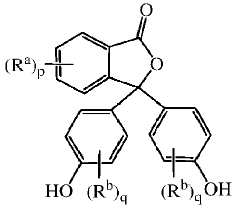 hat, jeweils bestimmt durch Flüssigchromatographie-Analyse.

13. Eine Zusammensetzung, die Folgendes umfasst:
das Polyisoindolinon gemäß einem beliebigen oder mehreren der Ansprüche 1-7 oder das Polyisoindolinon, hergestellt durch das Verfahren gemäß einem oder mehreren der Ansprüche 8-12; und
einen Zusatzstoff, partikelförmigen Füllstoff, ein Verstärkungsmittel oder eine Kombination, die mindestens eines der oben Genannten umfasst.

14. Ein Gegenstand, der das Polyisoindolinon gemäß einem oder mehreren der Ansprüche 1-7 oder das Polyisoindolinon, das durch das Verfahren gemäß einem beliebigen oder mehreren der Ansprüche 8-12 hergestellt wird, oder die Zusammensetzung gemäß Anspruch 13 umfasst,
wobei der Gegenstand vorzugsweise ein geformter Gegenstand, eine Schicht, eine oder mehrere Schichten einer Mehrfachschicht, ein extrudierter Gegenstand, eine Beschichtung, ein Pellet, ein Pulver, ein Schaum, eine Rohrleitung, eine Faser oder eine Flocke ist;
wobei der Gegenstand vorzugsweise eine optische Linse, ein Site-Glas, ein Lichtwellenleiter, ein Stromstecker, ein Leuchtdioden-Reflektor, ein Leiterplattensubstrat, ein Reflektor für einen Kraftfahrzeugscheinwerfer, eine Komponente eines Kraftstoffsystems für einen Benzinmotor oder einen Dieselmotor, ein Flugzeugtriebwerk oder ein Flugzeug-Turboprop-Triebwerk, ein Schwimmergehäuse oder ein Kraftstofffiltergehäuse ist.

15. Ein Verfahren zum Formen des Gegenstands gemäß Anspruch 14, das das Formen, Extrudieren oder Spritzgießen des Polyisoindolinons gemäß einem beliebigen oder mehreren der Ansprüche 1-7 oder des Polyisoindolinons, das durch das Verfahren gemäß einem oder mehreren der Ansprüche 8-12 hergestellt wird, oder der Zusammensetzung gemäß Anspruch 13 umfasst.

## Revendications

1. Polyisoindolinone comprenant
de 1 à 100 % en moles, de préférence de 5 à 100 % ne moles, de motifs isoindolinone éther cétone de formule 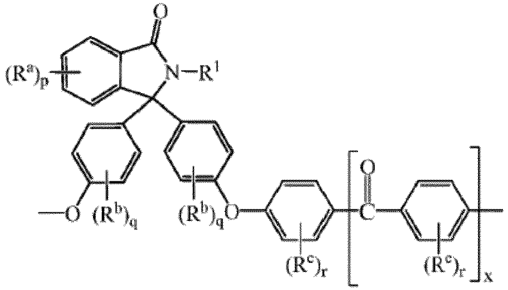 dans laquelle
chaque R¹ est indépendamment le même ou différent, et représente un atome d'hydrogène, un groupe alkyle en C₁₋₈, un groupe cycloalkyle en C₃₋₈ ou un groupe phényle éventuellement substitué par 1 à 5 groupes alkyle en C₁₋₆,
chaque R^{a} est indépendamment le même ou différent, et représente un groupe alkyle en C₁₋₆,
chaque R^{b} est indépendamment le même ou différent, et représente un groupe alkyle en C₁₋₁₂, un groupe alcényle en C₂₋₁₂, un groupe cycloalkyle en C₃₋₈ ou un groupe alcoxy en C₁₋₁₂,
chaque R^{c} est indépendamment le même ou différent, et représente un groupe alkyle en C₁₋₁₂, un groupe alcényle en C₂₋₁₂, un groupe cycloalkyle en C₃₋₈ ou un groupe alcoxy en C₁₋₁₂,
chaque p, q et r est indépendamment le même ou différent, et représente un nombre entier de 0 à 4, de préférence de 0 à 2, et
x représente un nombre entier de 1 à 4, de préférence de 1 à 3, de préférence égal à 1 ou 2 ; et
de 0 à 99 % en moles, de préférence de 0 à 95 % en moles, plus préférablement de 1 à 95 % en moles, encore plus préférablement de 5 à 90 % en moles, de motifs arylène éther cétone de formule 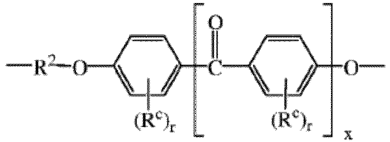 dans laquelle
chaque R² est indépendamment le même ou différent, et représente un groupe arylène en C₆₋₃₀ substitué ou non substitué,
chaque R^{c} est indépendamment le même ou différent, et représente un groupe alkyle en C₁₋₁₂, un groupe alcényle en C₂₋₁₂, un groupe cycloalkyle en C₃₋₈ ou un groupe alcoxy en C₁₋₁₂,
chaque r est indépendamment le même ou différent, et représente un nombre entier de 0 à 4, de préférence de 0 à 2, et
x représente un nombre entier de 1 à 4, de préférence de 1 à 3, de préférence égal à 1 ou 2 ; et
dans laquelle lorsque la polyisoindolinone est une (poly(insoindolinone éther éther cétone), elle présente au moins une des, de préférence au moins deux des, de préférence toutes les propriétés suivantes :
une température de transition vitreuse supérieure à 150 °C, ou de 150 à 270 °C telle que déterminée par calorimétrie différentielle à balayage,
une solubilité de moins de 25 % en poids à 23 °C dans le dichlorométhane, l'orthodichlorobenzène ou le chloroforme, ou
essentiellement pas de phosphorescence bleue suite à une irradiation avec une lumière ultraviolette de 320 à 400 nm.

2. Polyisoindolinone selon la revendication 1, présentant en outre au moins une des, au moins deux des, au moins trois des ou toutes les propriétés suivantes :
moins de 25 ppm de protons benzyliques de la polyisoindolinone ;
une teneur en groupes terminaux polymères hydroxyliques inférieure à 700 parties par million en poids de la polyisoindolinone ;
une teneur en atomes d'halogène inférieure à 900 parties par million en poids de la polyisoindolinone ;
une teneur en cations de métal alcalin ou de métal alcalino-terreux résiduels inférieure à 500 parties par million en poids de la polyisoindolinone ;
une teneur en solvant résiduel inférieure à 500 parties par million en poids de la polyisoindolinone.

3. Polyisoindolinone selon l'une quelconque ou plusieurs des revendications précédentes, présentant en outre au moins une des, au moins deux des, au moins trois des ou toutes les propriétés suivantes :
une température de décomposition initiale supérieure à 485 °C telle que déterminée au moyen d'une analyse thermogravimétrique dans de l'air et de l'azote ;
un coefficient de dilatation thermique de 30 à 90 ppm/°C, ou de 30 à 60 ppm/°C, ou de 40 à 60 ppm/°C, tel que déterminé selon la norme ASTM E831 ;
une cristallinité de 10 % ou plus, telle que déterminée au moyen d'une calorimétrie différentielle à balayage sur le second cycle thermique, le chauffage et le refroidissement étant effectués à une vitesse de 20 °C/minute à la fois pour les cycles de chauffage et de refroidissement.

4. Polyisoindolinone selon l'une quelconque ou plusieurs des revendications précédentes, dans laquelle :
un film de la polyisoindolinone d'une épaisseur de 300 µm présente une transmission d'au moins 70 % à 850 nm, 1 310 nm ou 1 550 nm telle que mesurée sur un spectrophotomètre ultraviolet-visible/proche infrarouge ; ou
un échantillon de film d'une épaisseur de 300 µm présente une transmission supérieure à 70 % telle que mesurée au moyen de l'espace colorimétrique CIEl931 (illuminant C et un observateur à 2°).

5. Polyisoindolinone selon l'une quelconque ou plusieurs des revendications précédentes, présentant en outre au moins une des ou au moins deux des propriétés suivantes :
une absorption d'eau inférieure à 3 %, de préférence inférieure à 1 %, plus préférablement inférieure à 0,6 % à 23 °C, après 24 heures par immersion directe ;
un changement de viscosité à l'état fondu de moins de 30 % en 30 min à 380 °C sous une atmosphère d'azote tel que mesuré dans une rhéologie de balayage temporel oscillatoire de faible amplitude à une fréquence angulaire fixe de 10 radians/seconde ; ou
un rendement en carbonisation supérieur à 30 % en poids, tel que déterminé au moyen d'une analyse thermogravimétrique sous une atmosphère inerte d'azote.

6. Polyisoindolinone selon l'une quelconque ou plusieurs des revendications précédentes,
dans laquelle un film pressé à l'état fondu d'une épaisseur de 300 µm peut être plié à 180 degrés plus de 3 fois sans se rompre ; ou
dans laquelle un film pressé à l'état fondu d'une épaisseur de 300 µm peut être plié à 180 degrés plus de 3 fois sans se rompre après autoclavage pendant 3 jours à 130 °C ; ou
présentant un module supérieur à 1 000 MPa à 150 à 300 °C, tel que mesuré par la norme ASTM D5418, sur un échantillon de film d'une épaisseur de 300 µm.

7. Polyisoindolinone selon l'une quelconque ou plusieurs des revendications précédentes, dans laquelle
R¹ représente un atome d'hydrogène, un groupe alkyle en C₁₋₆, un groupe cycloalkyle en C₃₋₆ ou un groupe phényle éventuellement substitué par 1 à 3 groupes alkyle en C₁₋₆,
R^{a} représente un groupe alkyle en C₁₋₄ ;
chaque R^{b} est indépendamment le même ou différent, et représente un groupe alkyle en C₁₋₆, un groupe alcényle en C₂₋₆, un groupe cycloalkyle en C₃₋₆ ou un groupe alcoxy en C₁₋₆ ;
chaque R^{c} est indépendamment le même ou différent, et représente un groupe alkyle en C₁₋₆, un groupe alcényle en C₂₋₆, un groupe cycloalkyle en C₃₋₈ ou un groupe alcoxy en C₁₋₁₂ ;
chaque R^{c} est indépendamment le même ou différent, et représente un groupe alkyle en C₁₋₆, un groupe alcényle en C₂₋₆, un groupe cycloalkyle en C₃₋₆ ou un groupe alcoxy en C₁₋₆ ;
chaque p, q, r et t est indépendamment le même ou différent, et représente un nombre entier égal à 0 ou 1, de préférence 0 ;
chaque x est indépendamment le même ou différent, et représente un nombre entier de 1 à 4, de préférence de 1 à 3, plus préférablement égal à 1 ou 2 ; et
R² représente un groupe arylène en C₆₋₃₀ substitué ou non substitué de formule 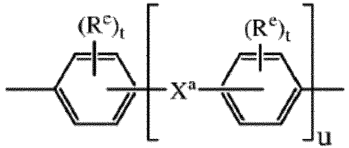 dans laquelle
chaque R^{e} est indépendamment le même ou différent, et représente un groupe alkyle en C₁₋₁₂, un groupe alcényle en C₂₋₆, un groupe cycloalkyle en C₃₋₆ ou un groupe alcoxy en C₁₋₆,
chaque t est indépendamment le même ou différent, et représente un nombre entier de 0 à 4,
chaque u est indépendamment le même ou différent, et représente un nombre entier de 0 à 4, de préférence égal à 0 ou 1,
et
chaque X^{a} représente indépendamment une liaison simple,-O-, -S-, -S(=O)-, -S(=O)₂-, -C(=O)-, -P(R)(=O)- où R représente un groupe alkyle en C₁₋₈ ou aryle en C₆₋₁₂, ou un groupe pontant organique en C₁₋₁₈ ;
de préférence dans laquelle R² est dérivé de la p-hydroquinone, de la méthylhydroquinone, de la diméthylhydroquinone, de la tert-butylhydroquinone, de la di-tert-butylhydroquinone, du résorcinol, du 4,4'-biphénol, de l'éther 4,4'-dihydroxydiphénylique, du 4,4'-isopropylidènediphénol, du 4,4'-(hexafluoroisopropylidène)diphénol, du bis(3,5-diméthyl-4-hydroxyphényl)isopropylidène, du bis(4-hydroxyphényl)sulfoxyde, de la bis(4-hydroxyphényl)sulfone, du bis(4-hydroxyphényl)sulfure, de la bis(3,5-diméthyl-4-hydroxyphényl)sulfone, du 4,4'-(1-phényléthylidène)bisphénol, de la 4,4'-dihydroxybenzophénone, du 1,4-bis-(p-hydroxybenzoyl)benzène, du 1,3-bis-(p-hydroxybenzoyl)benzène, ou d'une combinaison comprenant au moins l'un des précédents.

8. Procédé de fabrication de la polyisoindolinone selon l'une quelconque ou plusieurs des revendications précédentes, le procédé comprenant la polymérisation
d'une composition de monomère dihydrique comprenant, sur la base du poids total de la composition de monomère :
de 1 à 100 % moles, de préférence de 5 à 100 % en moles, d'une dihydroxyisoindolinone de formule : 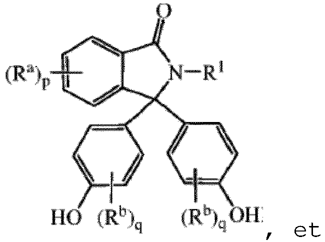
de 0 à 99 % en moles, de préférence de 0 à 95 % en moles, d'un composé dihydroxyarylène de formule
HO-R²-OH,
avec un composé dihalogéné de formule 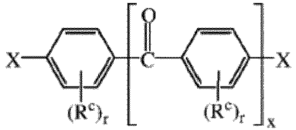
dans laquelle chaque X est indépendamment le même ou différent, et représente un halogène, de préférence lefluor, le chlore ou dle brome, ou une combinaison comprenant au moins l'un des précédents,
dans un mélange de polymérisation en phase liquide comprenant en outre un solvant organique pour la composition de monomère dihydroxy et le composé dihalogéné, dans des conditions suffisantes pour réaliser la polymérisation.

9. Procédé selon la revendication 8, comprenant en outre la formation in situ d'une composition de sel de métal dialcalin ou alcalino-terreux en faisant réagir le composé dihydroxyisoindolinone, le composé dihydroxyarylène, ou les deux, avec une source de métal alcalin ou alcalino-terreux dans des conditions efficaces pour former les sels de métal dialcalin ou alcalino-terreux correspondants, de préférence dans lequel le métal alcalin ou alcalino-terreux est fourni en une quantité de 0,5 à 1,05 équivalent molaire par mole de groupe phénolique.

10. Procédé selon la revendication 9, dans lequel la polymérisation comprend
la déshydratation de la composition de sel de métal alcalin ou alcalino-terreux pour éliminer l'eau par une ou plusieurs distillations azéotropiques en présence d'un co-solvant approprié ou en présence d'un balayage d'atmosphère de gaz inerte, de préférence d'azote, d'argon ou d'une combinaison comprenant au moins un des précédents ; puis
le chauffage du mélange de polymérisation à une température supérieure à 100 °C et inférieure à la température de décomposition des réactifs, du solvant et du polymère ; et
de préférence le chauffage du mélange de polymérisation de 200 à 350 °C jusqu'à ce que la polyisoindolinone résultante ait une teneur en extrémités polymères hydroxyliques inférieure à 700 parties par million en poids ou une teneur en atomes d'halogène inférieure à 900 parties par million en poids du polymère, ou un changement de poids moléculaire inférieur à 500 Daltons/heure.

11. Procédé selon l'une quelconque ou plusieurs des revendications 8 à 10, dans lequel
la polymérisation est réalisée en présence d'un agent de coiffage d'extrémités, de préférence de 1,5 à 4 % en moles d'un agent de coiffage d'extrémités, sur la base des moles totales de la composition de monomère dihydrique ; et
l'agent de coiffage d'extrémités est ajouté au début, pendant ou à la fin de la polymérisation, plus préférablement l'agent de coiffage d'extrémités est ajouté au début ou pendant la polymérisation.

12. Procédé selon l'une quelconque ou plusieurs des revendications 8 à 11, dans lequel la dihydroxyisoindolinone comprend moins de 1 000 parties par million en poids de chacun de
un monoaminophénol de formule 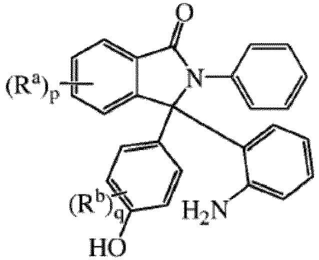 ou
un composé phénophtaléine de formule 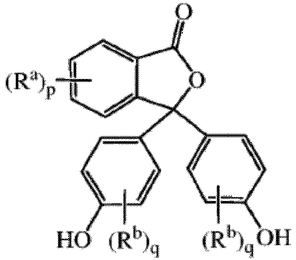 chacun étant déterminé par analyse par chromatographie liquide.

13. Composition comprenant
la polyisoindolinone selon l'une quelconque ou plusieurs des revendications 1 à 7, ou la polyisoindolinone préparée par le procédé selon l'une quelconque ou plusieurs des revendications 8 à 12 ; et
un additif, une charge particulaire, un agent de renforcement, ou une combinaison comprenant au moins l'un des précédents.

14. Article comprenant la polyisoindolinone selon l'une quelconque ou plusieurs des revendications 1 à 7 ou la polyisoindolinone préparée par le procédé selon l'une quelconque ou plusieurs des revendications 8 à 12 ou la composition selon la revendication 13,
de préférence dans lequel l'article est un article moulé, une couche, une ou plusieurs couches d'une multicouche, un article extrudé, un revêtement, une pastille, une poudre, une mousse, un tube, une fibre ou un flocon ;
de préférence dans lequel l'article est une lentille optique, un verre de chantier, un connecteur fibre optique, un connecteur électrique, un réflecteur à diode électroluminescente, un substrat de carte de circuit imprimé, un réflecteur pour phare automobile, un composant d'un système de carburant pour un moteur à essence, ou un moteur diesel, un moteur à réaction d'aéronef, ou un turbopropulseur pour embarcation, une cuve de carburateur ou un boîtier de filtre à carburant.

15. Procédé de formation de l'article selon la revendication 14, comprenant la mise en forme, l'extrusion, le moulage ou le moulage par injection de la polyisoindolinone selon l'une quelconque ou plusieurs des revendications 1 à 7 ou de la polyisoindolinone préparée par le procédé selon l'une quelconque ou plusieurs des revendications 8 à 12 ou de la composition de la revendication 13.
